# EUROPEAN PATENT SPECIFICATION

(11) **EP 1 327 528 B1**
(45) Date of publication and mention of the grant of the patent: **21.05.2008**
(21) Application number: 03000509.4
(22) Date of filing: 09.01.2003
(51) Int. Cl.: B41M 5/30, B41M 5/36, H04N 1/00, G06K 19/00, B41M 7/00

(54) **Apparatus for processing reversible recording medium and image processing system using the same**
Gerät zur Bearbeitung von reversiblem Aufzeichnungsmaterial und dessen Verwendung in einem Bildverarbeitungssystem
Appareil de traitement d'un support d'enregistrement reversible et système de traitement d'image l'utilisant

(30) Priority: 10.01.2002 JP 2002003454
(43) Date of publication of application: 16.07.2003
(73) Proprietor: Ricoh Company, Ltd., Tokyo 143-8555 (JP)
(72) Inventor: Hattori, Hitoshi, Yokosuka-shi, Kanagawa (JP)
(74) Representative: Schwabe - Sandmair - Marx

(56) References cited:
- US-A- 5 379 058
- US-A- 5 521 371
- US-A- 5 574 538
- US-A1- 2001 053 003

## Description

### BACKGROUND OF THE INVENTION

### 1. Field of the Invention

The present invention generally relates to apparatuses for processing a reversible recording medium whose state changes reversibly due to energy such as heat, light, electricity, or magnetism so that a visible image can repeatedly be recorded and erased, and image processing systems using such apparatuses. The present invention relates more particularly to an apparatus for processing a reversible recording medium so as to change the state of its reversible recording layer and an image processing system using such an apparatus.

### 2. Description of the Related Art

In conventional hard copies, a visible image is formed on a recording medium such as paper by attaching and fixing a coloring agent such as ink or toner to the recording medium from outside, or a visible image is formed on a recording medium such as heat-sensitive paper having a heat-sensitive layer on a base material such as paper by applying heat to the recording medium, thereby forming a permanent image on the recording medium. However, a recent sharp increase in recording medium consumption due to popularity of copiers and facsimile machines and frequent information outputting from computers has become a social problem in terms of nature conservation, energy consumption, and waste disposal. Therefore, a repeatedly reusable recording medium from which a recorded visible image is erasable and on which another visible image is recordable has received attention.

Such a recording medium is disclosed, for instance, in Japanese Laid-Open Patent Application No. 55-154198, which teaches a recording medium that allows transparent and opaque states to be reversibly formed by taking advantage of light scattering change in a polymer film in which the crystal grains of the organic low molecules of, for instance, a fatty acid, are dispersed. This recording medium has been put to practical use as the contents display part of a magnetic card. The display image, however, is so different from the actual image as to be inappropriate as a normal hard copy. This is because printing is performed in white on a background colored in black or blue or on a light-reflective background such as a deposited aluminum film. Therefore, Japanese Laid-Open Patent Application No. 5-124360 proposes a reversible thermal recording medium (hereinafter referred to as a thermal recording medium) that employs, as its reversible recording layer, a leuco dye that can reversibly enter a color-developed state where color is developed and a color-erased state where color is erased so that an image can be recorded with developed color on a white background. In this thermal recording medium, switching between the color-developed state and the color-erased state can be controlled by a heating-temperature or cooling-rate difference. Such a thermal recording medium enables repeated image recording and erasure so as to be able to replace a recording medium in the conventional environment where paper is used as the recording medium. In this case, the reusability of the recording medium is increased compared with the case of using a paper medium, thus contributing to resource and energy saving.

In offices or at school, information displayed on a computer display, for instance, is printed out on a recording medium such as paper by an imaging apparatus such as a printer, and frequently, the output information is corrected with a writing instrument and its important part is marked with a highlighter pen. Therefore, in order for the above-described reversible recording medium to be widely used instead of a paper medium, it is necessary that an image can be added by writing or marking on the reversible recording medium on which images have been recorded. A variety of reversible recording media enabling image addition have been proposed.

Meanwhile, in offices, a computerized environment, or so-called IT environment, has become common so that many documents are created by computers or digitized by scanners to be managed as electronic data. By such management, the contents of the documents can be corrected or modified easily compared with the case of using a paper medium, thus significantly improving the efficiency of office workflow. The document data thus managed as electronic data can be viewed on the display. Practically, however, it is often more convenient to confirm the document contents on a recording medium such as paper than on the display. Further, in the case of using a document outside the office, a computer with a display is required to read the document if the document is in the form of electronic data, while nothing is required in particular outside the office if the document is in the form of a paper medium. For these reasons, the merit of using a document in the form of a recording medium such as paper is still significant in the office.

However, in the case of printing a document managed as electronic data on a recording medium such as paper and using the printed document, a user may correct or add information to the contents of the document printed on the recording medium with a writing instrument. In this case, the contents of the corrected or added information are often reflected in the original document data so as to be used in the following operations. Conventionally, however, the user is required to operate an input device of a computer, such as a keyboard or a mouse, so as to perform an editing operation of inputting the contents of the additional information on the recording medium (paper medium) to the original document data or correcting the original document data. Such an operation is complicated, thus resulting in reduction in the operational efficiency of office workflow.

Japanese Laid-Open Patent Application No. 9-101864 discloses a well-known prior art technology that enables a document to be used as electronic data as well as in the form of a recording medium such as paper. This patent application discloses an apparatus including a plurality of paper-like information display recording media capable of rewritably displaying and retaining a variety of information, a plurality of information storage recording media, and an information recording device (tablet). In this apparatus, information input in handwritten form to the information recording device can be displayed on the information display recording media and stored in the information storage recording media. Further, information read out from the information storage recording media by the information recording device can also be displayed on the information display recording media. According to this apparatus, information such as documents or images created by a computer or handwritten input information can be displayed rewritably on the information display recording media a number of times, and the information can be processed as digital information that can be stored in the memory, output to and input from the outside, and processed by a computer. Thermal recording media similar to the ones described above are employed as the information display recording media. This apparatus, as means for storing a variety of information such as characters and images in a visible state, has the merits of both means for recording information on the conventional paper media and means for recording information in a computer having a display and a memory, thus producing the effects of both means. That is, this apparatus can prepare documents without consuming paper and store documents as electronic data. In using this apparatus, however, it is necessary to carry the tablet around in order to edit information recorded on the information display recording media outside the office, thus reducing convenience compared with the case of using a recording medium such as paper. Further, writing on the tablet may give a user a different touch from writing on paper with a writing instrument. Therefore, the user may have an uncomfortable feeling.

US-5,379,058 discloses a recording apparatus for recording data in a thermosensitive recording medium. The recording medium has a reversible thermosensitive recording material capable of selectively assuming one of two visible states, e.g., a cloudy state and a transparent state or a colored state and a decolored state when heated. The thermosensitive material is applied to a sheet of resin. The apparatus surely erases data written in the medium with no regard to the time elapsed and the number of times that data has been repetitively written. The cloud density or the color density is prevented from changing with no regard to the storage temperature, the time elapsed, or the number of times of writing, thereby preventing image quality from being degraded.

US 2001/0053003 discloses an illumination device and image reading apparatus. The device has a visible light emitting element for emitting visible light, an infrared light emitting element for emitting infrared light, a board including a first mounting portion on which elements including at least the visible light emitting element are mounted in array and a second mounting portion on which elements including at least the infrared light emitting element are mounted in array, and a dichroic mirror which is configured and disposed to reflect light emitted by the visible light emitting element mounted on the first mounting portion by its first surface, reflect light emitted by the infrared light emitting element mounted on the second mounting portion by its second surface, and send light beams coming from the first and second surfaces onto a common optical path.

US-5,574,538 discloses a method and an apparatus for removing an image forming substance such as toner from an image holding member such as a sheet of transfer paper. In the method and apparatus, an unstabilizing agent is provided to the image holding member. An attaching state between the image forming substance and the image holding member stably attaching the image forming substance on a surface thereof is changed to an unstable state by the unstabilizing agent. The image forming substance is separated and removed from the image holding member by making a separating member come in close contact with the image forming substance on the image holding member having the provided unstabilizing agent. A processing situation mark showing a processing situation of removal of the image forming substance is formed in the image holding member. The processing situation mark can be removed from the image holding member by the image forming substance removing processing.

US-5,521,371 discloses a rewritable bar code display medium, which is composed of a support and a reversible thermosensitive recording layer for reversibly forming bar codes therein formed on the support, which reversible thermosensitive recording layer varies in transparency with change in temperature, and an image display method using the rewritable bar code display medium, and an apparatus for implementing the image display method are also disclosed.

### SUMMARY OF THE INVENTION

Accordingly, it is an object of the present invention to provide an apparatus for processing a reversible recording medium in which the foregoing disadvantages are eliminated, and an image processing system employing such an apparatus.

The aformentioned object is solved by the subject - matter of the independent claims. The dependent claims are directed to advantageous embodiments. It is further advantageously provided an apparatus for processing a reversible recording medium which apparatus can reflect, without an editing operation by a user, the contents of information such as letters or marks added to a reversible recording medium in the same way as such information is added to a conventional paper medium with a writing instrument in the original electronic data of a visible image which data is stored in the reversible recording layer of the reversible recording medium.

It is further advantageously provided an image processing system employing such an apparatus for processing a reversible recording medium

It is further advantageously provided an apparatus (1) for processing a reversible recording medium (100) having a reversible recording layer (102) whose state is reversibly changeable so that a visible image can be recorded on or erased from the reversible recording medium (100) by changing the state of the reversible recording layer (102), the apparatus (1) including a processing part (10,20) changing the state of the reversible recording layer (102), the apparatus (1) comprising an added image reading part (40) reading, as electronic data, an image added to a surface of the reversible recording medium (100)

According to the above-described apparatus (1), an image added on the reversible recording medium (100) by the user in the same way as added on conventional paper with a writing instrument can be converted into electronic data processable by a computer. Thereby, the apparatus (1) produces the excellent effect of enabling information based on the added image (character information) to be reflected in the original electronic data of a visible image recorded in the reversible recording layer (102) of the reversible recording medium (100) without requiring the user to perform editing.

It is further advantageously provided an image processing system including: an apparatus (1) for processing a reversible recording medium (100) having a reversible recording layer (102) whose state is reversibly changeable so that a visible image can be recorded on or erased from the reversible recording medium (100) by changing the state of the reversible recording layer (102), the apparatus (1) including a processing part (10,20) changing the state of the .reversible recording layer (102); and an information processing apparatus (300 or 301) having an original data storing part storing original data of a visible image recorded in the reversible recording layer (102) of the reversible recording medium (100), the information processing apparatus (300 or 301) being connected via a communication part to the apparatus (1), the image processing system further comprising : an added image reading part (40) reading, as electronic data, an image added to a surface of the reversible recording medium (100); and an identification information reading part (50) reading identification information of the reversible recording medium (100) so as to identify an image recorded on or added to the reversible recording medium (100); and the identification information includes information for specifying the original data of the visible image recorded in the reversible recording layer (102) of the reversible recording medium (100), the image processing system further comprising : an original data specifying part (201) specifying, among original data stored in said original data storing part of the information processing apparatus (300 or 301), the original data corresponding to the identification information read by the identification information reading part (50); and a data adding part (300 or 301) adding contents of the data on the added image read by the added image reading part (40) to contents of the original data specified by the original data specifying part (201).

According to the above-described image processing system, data on an image added on the reversible recording medium (100) by the user in the same way as added on conventional paper with a writing instrument can be added to the original electronic data of a visible image recorded on the reversible recording medium. Thereby, the image processing system produces the excellent effect of enabling the added information (character information) represented by the added image to be reflected in the original electronic data of the visible image recorded in the reversible recording layer (102) of the reversible recording medium (100) without requiring the user to perform editing.

### BRIEF DESCRIPTION OF THE DRAWINGS

Other objects, features and advantages of the present invention will become more apparent from the following detailed description when read in conjunction with the accompanying drawings, in which:
FIGS. 1A and 1B are sectional views of configurations of a thermal recording medium processed by a recording rewriting apparatus of an embodiment of the present invention;
FIG. 2A is a diagram showing the thermal recording medium on which letters (characters) are written with a writing instrument and FIG. 2B is a sectional view of the thermal recording medium on which the character image is added and in which a document image based on document data is stored in a reversible recording layer according to the embodiment of the present invention;
FIG. 3A is a diagram showing the thermal recording medium on which letters (characters) are written with a writing instrument and FIG. 3B is a sectional view of the thermal recording medium on which the character image is written and in which a document image based on document data and a barcode image are recorded in the reversible recording layer according to the embodiment of the present invention;
FIGS. 4A and 4B are graphs showing basic color developing and erasing processes of the thermal recording medium;
FIG. 5 is a schematic diagram showing the recording rewriting apparatus according to the embodiment of the present invention;
FIGS. 6A and 6B are diagrams for illustrating an operation of a cleaning part of the recording rewriting apparatus according to the embodiment of the present invention;
FIG. 7 is a schematic diagram showing an added image reading part of the recording rewriting apparatus according to the embodiment of the present invention;
FIG. 8 is a graph showing the absorption spectrum of the reversible recording layer formed of a leuco dye having the color development and erasure characteristics shown in FIG. 4A;
FIG. 9 is a schematic diagram showing a configuration of the recording rewriting apparatus further including a barcode reading part in addition to its configuration of FIG. 5 according to the embodiment of the present invention;
FIG. 10 is a schematic diagram showing the barcode reading part of the recording rewriting apparatus according to the embodiment of the present invention;
FIGS. 11A through 11C are top plan views of the recording rewriting apparatus for illustrating configurations and arrangements of the barcode reading part according to the embodiment of the present invention;
FIGS. 12A and 12B are schematic diagrams showing component arrangements of the recording rewriting apparatus according to the embodiment of the present invention;
FIG. 13 is a block diagram showing a control part of the recording rewriting apparatus according to the embodiment of the present invention;
FIGS. 14A and 14B are schematic diagrams showing configurations of a recording rewriting system according to the embodiment of the present invention;
FIG. 15 is a flowchart of the operation of a PC in the case of recording a document image, together with a barcode image, on the thermal recording medium according to the embodiment of the present invention;
FIG. 16 is a flowchart of a rewriting operation performed on the thermal recording medium according to the embodiment of the present invention;
FIG. 17 is a flowchart of an operation of correlating the barcode information and the character image data read from the thermal recording medium in the rewriting operation of FIG. 16 according to the embodiment of the present invention;
FIG. 18 is a flowchart of a rewriting operation by the recording rewriting apparatus according to a variation of the embodiment of the present invention;
FIG. 19 is a flowchart of an operation of correlating the barcode information and the character image data read from the thermal recording medium in the rewriting operation of FIG. 18 according to the variation of the embodiment of the present invention; and
FIG. 20 is a diagram showing data arrays read by a line sensor of the recording rewriting apparatus as scanned line-by-line according to the variation of the embodiment of the present invention.

### DETAILED DESCRIPTION OF THE PREFERRED EMBODIMENTS

A description will now be given, with reference to the accompanying drawings, of an embodiment of the present invention.

In this embodiment, the present invention is applied to a recording rewriting system as an added image processing system including a recording rewriting apparatus as an apparatus for processing a reversible recording medium and a personal computer (hereinafter referred to as a PC) as an information processing apparatus connected to the recording rewriting apparatus via a network as communication means. A commercially available common PC can be employed as the PC of this embodiment.

The reversible recording medium processed by the recording rewriting apparatus of this embodiment has a reversible recording layer whose state changes reversibly, and can record and erase a visible image by changing the state of the reversible recording layer by processing with energy such as heat, light, electricity, or magnetism. In this processing, only one type of energy may be used, or a plurality of types of energy may be used in combination. A description will be given herein of a typical reversible recording medium, which is not the only example of the reversible recording medium according to this embodiment.

As a reversible recording medium (hereinafter referred to as a thermal recording medium) which an image is recorded on or erased from using thermal energy, a thermal recording medium using the reversible coloring of a leuco dye is typically used. This type of thermal recording medium is the most suitable for document use since an image can be formed thereon with color developed with high contrast. This type of thermal recording medium will be expatiated later.

Other types of thermal recording media include a recording medium that has a reversible recording layer taking advantage of the reversible light scattering change of a composite film in which the crystal grains of a low molecular compound are dispersed among a polymer and a recording medium having a reversible recording layer taking advantage of the reversible light scattering change of a polymer liquid crystal layer. In the former type of thermal recording medium, generally, when the recording medium is heated to or above the melting point of the low molecular compound, the reversible recording layer becomes opaque so that an image can be recorded thereon, and when the thermal recording medium is heated below the melting point, the reversible recording layer becomes transparent so that an image can be erased therefrom. On the other hand, in the latter type of thermal recording medium, when the recording medium is suddenly cooled after being heated to or above the isotropic point, the reversible recording layer becomes transparent so that an image can be recorded thereon, and when the recording medium is gradually cooled after being heated to or above the isotropic point, the reversible recording layer becomes opaque so that an image can be erased therefrom. Other than these types, there is a type of recording medium that uses a liquid crystal material, a polymer material, or the combination thereof, so as to perform image recording and erasure using difference in heating temperature or difference in the rate of cooling after heating.

There are also well known reversible recording media that can record an image with electric energy and have the memory characteristic of retaining the recorded image without electric power. Of those reversible recording media, one having a reversible recording layer where an image can be recorded or erased by an electric field is preferable for minimizing power consumption. A liquid crystal material can be used as the reversible recording layer. In the case of using a ferroelectric polymer liquid crystal as the reversible recording layer, for instance, the reversible recording layer is provided with a stable memory characteristic so as to be suitably used in rewritable recording media. A nematic liquid crystal material or a cholesteric liquid crystal material having a memory characteristic can also be used. Using any of these liquid crystal materials, an image can be recorded in the reversible recording layer using a change in its polarization properties. In addition, a colored image can be recorded reversibly on the reversible recording layer by including dichroic dye therein. Generally, this type of reversible recording layer records an image by an electric field, but some reversible recording layers of this type are capable of recording and erasing an image by the combination of an electric field and another type of energy such as heat so as to improve their image retention characteristics.

Some of the reversible recording media recording and erasing an image by electric energy employ an electrophoresis material. Such reversible recording media include a recording medium that reversibly records and erases an image by moving, by an electric field, white particles of titanium oxide dispersed in a colored solvent. Particularly, a reversible recording medium having a reversible recording layer where such an electrophoresis material is encapsulated in a microcapsule to be fixed by resin on a support body such as a polymer film can be suitably used as a recording medium for a document instead of a paper recording medium. Further, a reversible recording medium that reversibly records and erases an image by rotating spherical particles encapsulated with a solute in a microcapsule supported on a support body, the half of the spherical particles being colored and the remaining half being white, can also be used.

The above-described reversible recording media that can record and erase an image using electric energy can be processed by a well known method such as writing with an electrostatic stylus or a head formed of electrostatic styli arranged in line, writing by ion flow, or writing by transferring an electrostatic latent image onto a reversible recording layer using a electrophotographic sensitive body.

Of the foregoing reversible recording media, particularly, the thermal recording medium using material such as a leuco dye so as to reversibly develop and erase color by heat treatment to the reversible recording layer enables recording of a high-contrast image on a white ground, and therefore, is the most suitable practical replacement for the conventional recording medium such as paper as a recording medium for document use. This thermal recording medium may develop and erase color using the difference in heating temperature and/or difference in the rate of cooling after heating. Such a thermal recording medium is disclosed in Japanese Laid-Open Patent Application Nos. 10-58724, 5-124360, 11-268419, and 11-192737.

A description will now be given in detail of the thermal recording medium of this embodiment used as a reversible recording medium.

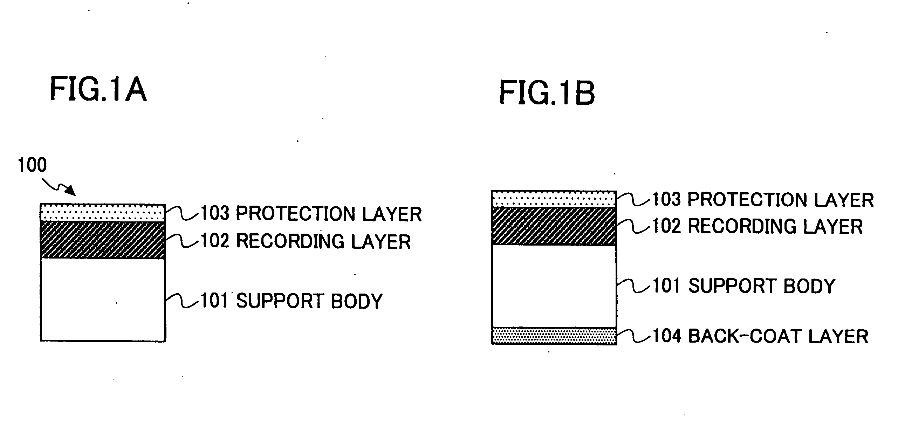

FIGS. 1A and 1B are sectional views of configurations of a thermal recording medium 100 processed by a recording rewriting apparatus of this embodiment. The sectional views are taken along the thickness of the thermal recording medium 100. FIG. 1A shows a typical configuration of the thermal recording medium 100. The thermal recording medium 100 of FIG. 1A includes a reversible recording layer 102 and a protection layer 103 layered successively on the upper surface of a support body 101. FIG. 1B shows another typical configuration of the thermal recording medium 100. The thermal recording medium 100 of FIG. 1B includes a reversible recording layer 102 and a protection layer 103 layered successively on the upper surface of a support body 101 and a back-coat layer 104 formed on the lower surface of the support body 101.

Paper, synthetic paper, or a plastic film is used as the support body 101. In the case of using paper as the support body 101, it is preferable to use coated paper with a coating of filler and a binding agent in order to increase the smoothness and whiteness of the support body 101. In the case of using a plastic film as the support body 101, a polyethylene terephthalate (PET) film is used. This film may be transparent, or whitened by dispersing filler. Image information may be preprinted on a surface of the support body 101 as required. It is preferable that the support body 101 be approximately 0.05 to 0.5 mm in thickness. Particularly, for document use, it is preferable that the support body 101 be approximately as thick as commonly used paper of 0.05 to 0.25 mm in thickness in terms of handling easiness.

The reversible recording layer 102, which is formed of material such that its optical characteristics with respect to visible light, such as absorption, transmission, reflection, and scattering, are subject to change depending on a condition such as heat application temperature, may employ material that can reversibly fix a color-developed state and a color-erased state in a room temperature environment. Specifically, thermal recording media disclosed in Japanese Laid-Open Patent Application Nos. 5-124360, 6-210954, 10-95175, 2000-33776, 2000-118142, and 2001-162941 can be used as the thermal recording medium 100 of this embodiment. Particularly, it is preferable to use a leuco dye that provides high contrast and excellent visibility as the reversible recording layer 102. For instance, the leuco dye may be a phthalide-based compound, an azaphthalide-based compound, a fluoran-based compound, a phenothiazine-based compound, or a leucoauramine-based compound. Further, as a developer for reversibly developing the color of the leuco dye, a compound in which an acidic group such as a phenolic hydroxyl group, a carboxylic acid group, or a phosphonic acid group and a long-chain hydrocarbon group controlling inter-molecular cohesive force are linked may be employed. The developer may contain a bivalent group including a hetero atom between its linking group and long-chain hydrocarbon group. The reversible recording layer 102 is formed of a reversible color development material such as the above-described leuco dye and resin. The resin is preferably of a curable type having resistance to thermal and mechanical stress caused by repetitive rewriting. It is preferable that the reversible recording layer 102 be approximately three to 15 µm in thickness.

The protection layer 103 is provided so as to protect the reversible recording layer 102 from thermal and mechanical stress applied thereto from a thermal head for image recording, thereby preventing damage to the surface of the reversible recording layer 102. Further, in order to prevent ultraviolet rays from dissolving the leuco dye, it is preferable that the protection layer 103 have the function of absorbing ultraviolet rays. The protection layer 103 may be formed of at least two layers provided with the function of absorbing ultraviolet rays and the function of providing protection from thermal and mechanical stress, respectively. It is preferable that the protection layer 103 employ a curable resin in terms of strength. Further, smooth movement of the thermal head on the surface of the protection layer 103 is also important at the time of image recording, so that filler may be added to the surface of the protection layer 103 for some unevenness. It is also required that the gloss of the surface of the protection layer 103 be lowered to some extent for document use, which can also be realized by adding filler. Furthermore, the protection layer 103 may contain a coloring agent. Thereby, in the case of using the thermal recording medium 100 for a document, the thermal recording medium 100 can be easily distinguished from plain paper media even if the thermal recording medium 100 is mixed up with the plain paper media. It is preferable that the protection layer 103 is approximately one to 10 µm in thickness.

The back-coat layer 104 has the function of preventing the occurrence of curling of the support body 101 when the support body 101 is made of paper and contracts or stretches due to absorbing moisture. It is preferable to use a curable resin as a material for the back-coat layer 104. The hardness and the film thickness of the material are selected in consideration of its balance with the support body 101, the reversible recording layer 102, and the protection layer 103.

The thermal recording medium 100 may contain an undercoat layer and/or a thermal insulation layer on the support body 101 as required in addition to the above-described layers. Further, the reversible recording layer 102 and the protection layer 103 may be formed on each side of the support body 101 so that image recording can be performed on both sides.

Furthermore, the thermal recording medium 100 of this embodiment may include a magnetic memory, an optical memory, a magneto-optical memory, or an IC memory as an information recording part in the support body 101.

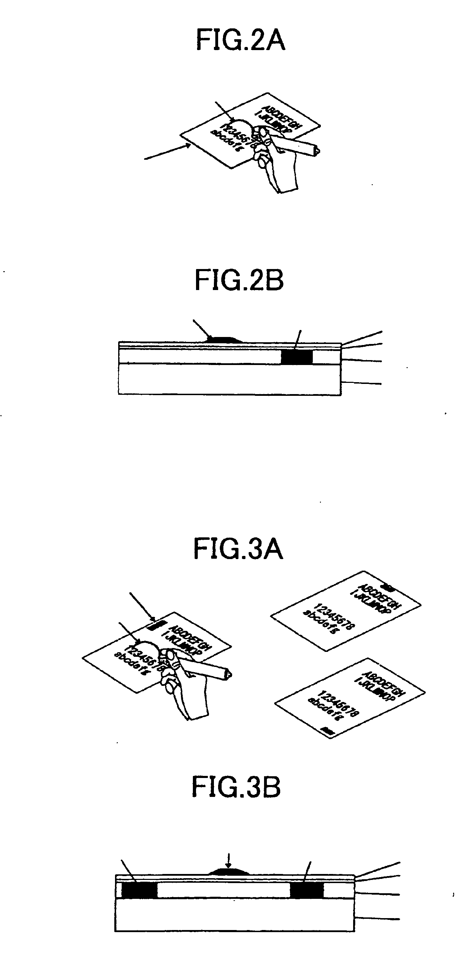

FIG. 2A is a diagram showing the thermal recording medium 100 on which an image is added (an additional image is written) with a writing instrument. FIG. 2B is a sectional view of the thermal recording medium 100 on which the additional image is written and in which a visible image based on predetermined information is stored in the reversible recording layer 102. In the following, a description will be given of the case where a user writes a character (an additional image) with a writing instrument on the thermal recording medium 100 where a document image (visible image) based on document information created by the PC is recorded in the reversible recording layer 102. As shown in FIG. 2B, ink adheres as an additional material to the surface of the thermal recording medium 100 through the writing instrument so that the character image is retained on the surface. The document image is recorded in the reversible recording layer 102 of the thermal recording medium 100 by the contrast between a developed-color part and an erased-color part. In this embodiment, the document image is recorded in the reversible recording layer 102 by the color development of the document image part.

Like FIG. 2A, FIG. 3A shows the thermal recording medium 100 on which letters (characters) are written with a writing instrument. FIG. 3B is a sectional view of the thermal recording medium 100 where the character image is written on its surface and a document image and a later-described barcode image as identification information are recorded in the reversible recording layer 102. As shown in FIG. 3B, ink adheres as an additional material to the surface of the thermal recording medium 100 through the writing instrument so that the character image is retained on the surface. The document image and the barcode image are recorded in the reversible recording layer 102 of the thermal recording medium 100 by the contrast between a developed-color part and an erased-color part. It is preferred that the barcode image be recorded, with respect to the document image, in the periphery of the thermal recording medium 100, such as a side edge part or a lower edge part as shown in FIG. 3A, so as not to hinder recording of the document image.

Next, a description will be given of the basic color developing and erasing processes of the thermal recording medium 100 using a leuco dye.

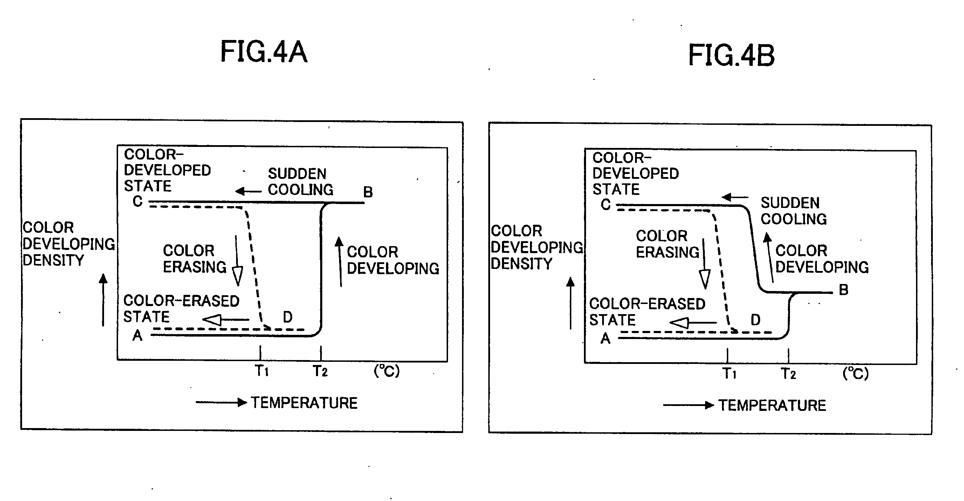

FIGS. 4A and 4B are graphs showing basic color developing and erasing processes of the thermal recording medium 100. FIGS. 4A and 4B show two typical cases whose color developing and erasing processes are different because of material difference. According to each of the graphs, when the thermal recording medium 100 is heated from the color-erased state A and is cooled suddenly after entering the state B where the thermal recording medium 100 is heated to or above a temperature T₂ at which the reversible color development component melts, the color-developed state C of the leuco dye is fixed. Thereby, an image is recorded on the thermal recording medium 100. On the other hand, when the thermal recording medium 100 is heated from the color-developed state C to temperatures within the T₁-T₂ color-erasure temperature range lower than the temperature T₂, the leuco dye enters the color-erased state D and thereafter is fixed in the color-erased state A. Thereby, an image recorded on the thermal recording medium 100 can be erased.

Normally, a thermal head is used in image recording, but a laser beam is also employable. In image erasing, a ceramic heater substrate having a belt-like heating body and a glass protection layer formed thereon or a heat roller having an internal heat source is practically employed.

Next, a description will be given of the configuration of a recording rewriting apparatus 1 according to this embodiment and the operations of components thereof.

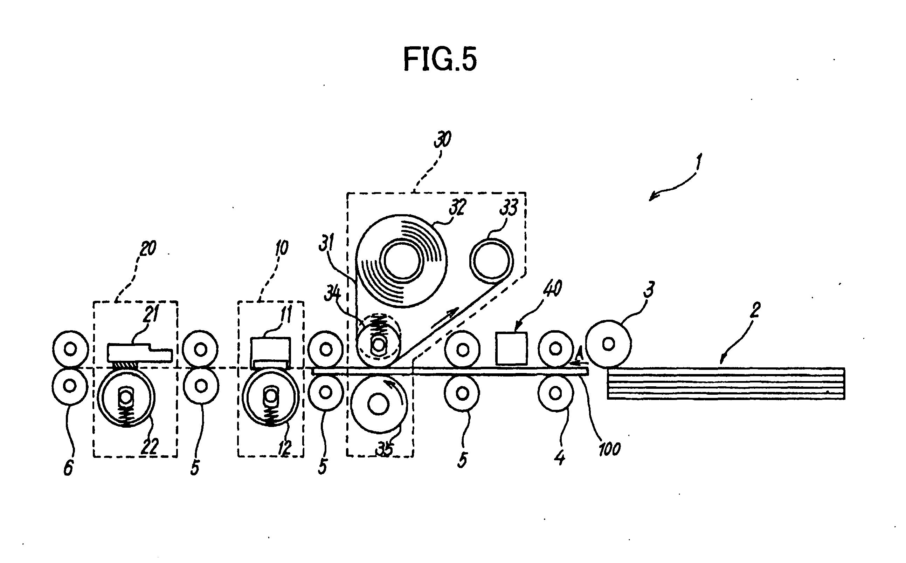

FIG. 5 is a schematic diagram showing the recording rewriting apparatus 1 according to this embodiment. The recording rewriting apparatus 1 includes an erasing part 10, a recording part 20, a cleaning part 30, and an added (additional) image reading part 40. The erasing part functions as a processing part providing heat treatment to the thermal recording medium 100 using a heater substrate 11 that is a heating member for erasing as a processing member so as to cause the reversible recording layer 102 of the thermal recording medium 100 to enter in the color-erased state. The recording part 20 functions as a processing part providing heat treatment to the thermal recording medium 100 using a thermal head 21 that is a heating member for recording as a processing member so as to cause the reversible recording layer 102 of the thermal recording medium 100 to enter in the color-developed state. The cleaning part 30 forms an added material removing part removing added material 100a forming a character image added to the surface of the thermal recording medium 100. The recording rewriting apparatus 1 further includes a paper feed tray 2 containing the thermal recording medium 100 to be processed, a paper feed roller 3 feeding out the thermal recording medium 100 from the paper feed tray 2, conveying rollers 4 conveying the thermal recording medium 100 fed out from the paper feed tray 2, three pairs of guide rollers 5 guiding and conveying the thermal recording medium 100, ejecting rollers 6 ejecting the processed thermal recording medium 100 from the recording rewriting apparatus 1. The recording rewriting apparatus 1 further includes a power supply part supplying power to each part, a driving part supplying drive force to each part, and a control part controlling the operation of each part of the recording rewriting apparatus 1. The power supply part, the driving part, and the control part are not shown in the drawing.

The erasing part 10 includes the heater substrate 11 for heating the thermal recording medium 100 and a pressure roller 12 for pressing the conveyed thermal recording medium 100 against the heater substrate 11. The heater substrate 11, which is a so-called ceramic heater substrate, is self-heating without a halogen lamp as a heat source. If the pressure roller 12 serves also as a medium conveying part that conveys the thermal recording medium 100, the guide rollers 5 can be omitted.

Alternatively, the erasing part 10 may employ a heat roller method using a halogen lamp. In this case, the erasing part 10 includes a heating roller for erasing and a pressure roller for erasing, thereby heating the thermal recording medium 100 so that developed color (recording) in the reversible recording layer 102 thereof is erased. The heating roller includes a heater such as a halogen lamp in its central part.

When the thermal recording medium 100 is conveyed to the erasing part 10, the reversible recording layer 102 is heated to the above-described color-erasure temperature range by heat energy generated from the heater substrate 11 in the erasing part 10, so that the document image formed in the reversible recording layer 102 is erased.

The recording part 20 includes the thermal head 21 heating the thermal recording medium based on predetermined image information and a pressure roller 22 for pressing the conveyed thermal recording medium 100 against the thermal head 21. The thermal head 21 includes multiple heating elements corresponding to the dots of an image, and can heat the part of the thermal recording medium 100 corresponding to the heating elements in a heating state to or above the above-described color-development temperature T₂, so that the document image is recorded in the reversible recording layer 102.

The cleaning part 30 includes a cleaning sheet 31, a supply roller 32, a winding roller 33, a pressure roller 34, and an auxiliary roller 35. The cleaning sheet 31 functions as a removing member removing the added material 100a. The supply roller 32 has a new part of the cleaning sheet 31 wound therearound. The winding roller 33 rolls up a used part of the cleaning sheet 31. The pressure roller 34 presses the cleaning sheet 31 against the surface of the thermal recording medium 100. The auxiliary roller 35 is provided to oppose the pressure roller 34 across the thermal recording medium 100. The cleaning sheet 31 is formed of a sheet-like fibrous member. In addition to abrasive cloth formed of a woven, knit, or nonwoven fabric of fiber having a slightly uneven surface, a normal woven, knit, or nonwoven fabric of pulp or chemical fiber may be used. The sheet-like member formed of such fiber scrapes off the added material 100a on the thermal recording medium 100 with its superficial fine unevenness with high effectiveness. Further, the added material 100a removed from the thermal recording medium 100 can be captured in the meshes of the fabric, so that the removed added material 100a seldom escapes from the fabric. Simultaneously with the added material 100a, the cleaning part 30 can also remove dust on the thermal recording medium 100 or a contaminant adhering thereto, such as a fingerprint or grease.

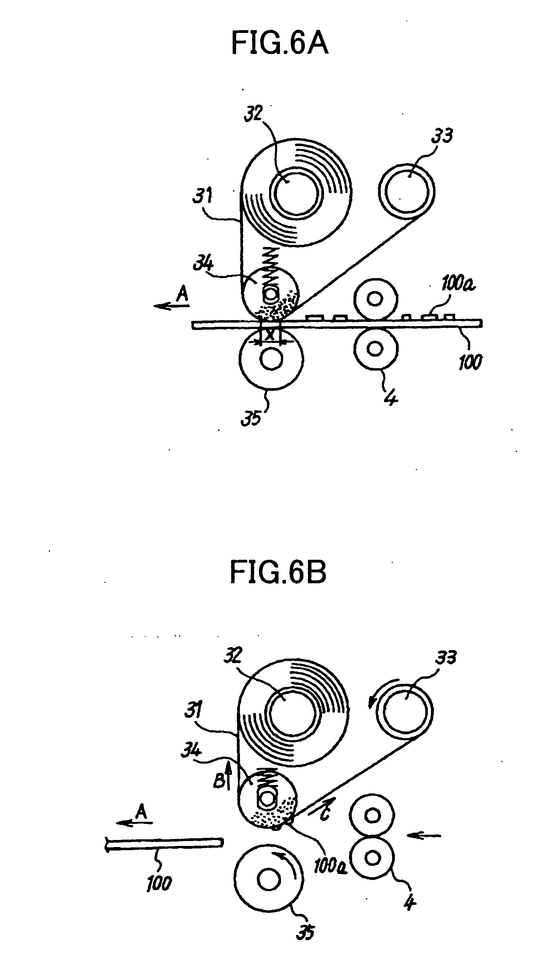

FIGS. 6A and 6B are diagrams for illustrating the operation of the cleaning part 30. The pressure roller 34, which is formed of rubber or sponge of low hardness, presses the cleaning sheet 31 onto the surface of the thermal recording medium 100 conveyed in the direction indicated by the arrow A in FIG. 6A. This direction may be referred to as a medium conveying direction. Thereby, a nip part X is formed between the pressure roller 34 and the thermal recording medium 100 whose bottom side is supported by the auxiliary roller 35. The superficial unevenness of the cleaning sheet 31 is also formed along its width (directions perpendicular to the direction A), so that the removal of the added material 100a (as well as contaminants) may be nonuniform along the width of the cleaning sheet 31. Therefore, it is desirable that the nip part X be set to have a relatively wide width so that all the added material 100a and contaminants are removed. Specifically, it is preferable that the nip part X be set to be 2mm or larger in width although the value of the width differs depending on the material of the cleaning sheet 31.

As shown in FIG. 6B, while the thermal recording medium 100 is in contact with the cleaning sheet 31, the cleaning sheet 31 is fixed so as not to move. When the thermal recording medium 100 passes the contacting part of the cleaning sheet 31, the pressure roller 34 moves in the direction indicated by the arrow B in FIG. 6B, that is, the pressure roller 34 moves away from the auxiliary roller 35, so as to prevent the added material 100a and contaminants collected by the cleaning sheet 31 from adhering to the auxiliary roller 35. Thereafter, the pressure roller 34 and the winding roller 33 are rotated by a stepper motor (not shown in the drawing) as a removing member moving part so that the cleaning sheet 31 is moved in the direction indicated by the arrow C in FIG. 6B. Thereby, the next removal operation can be performed on the thermal recording medium 100 with a new part of the cleaning sheet 31. It is preferred that a friction clutch be provided in a path for transmitting the drive force of the stepper motor to the winding roller 33 so as to absorb slack in the cleaning sheet 31.

According to this embodiment, the cleaning sheet 31 is fixed so as not to move during the removal operation. Alternatively, the cleaning sheet 31 may be designed to move, in the nip part X during the removal operation, in the direction opposite to the direction in which the thermal recording medium 100 is conveyed. In this case, compared with the case of the fixed cleaning sheet 31, the removal performance can be improved because the surface of the thermal recording medium 100 can be rubbed with part of the cleaning sheet 31 with less adhesion of the removed added material 100a and contaminants.

Next, a description will be given of the configuration and the operation of the added image reading part 40, which is a characteristic part of the present invention.

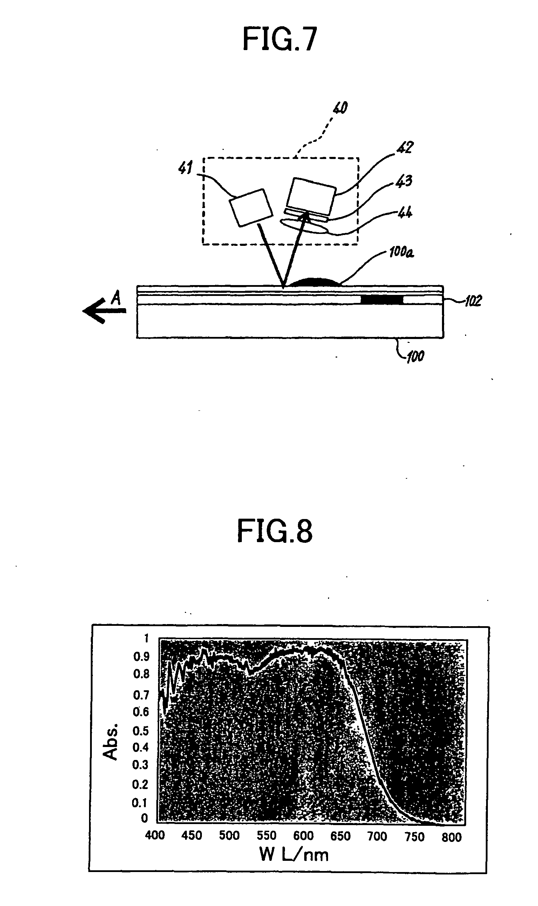

FIG. 7 is a schematic diagram showing the added image reading part 40. The added image reading part 40 includes a light-emitting element 41 and a light-receiving element 42. Light emitted from the light-emitting element 41 is reflected from the surface of the thermal recording medium 100 to be received by the light-receiving element 42 so that a character image formed by the added material 100a adhering to the surface of the thermal recording medium 100 is read. The light-emitting element 41 uses an infrared light source as a light source. Specifically, the light-emitting element 41 is formed of multiple infrared light-emitting diodes (LEDs) arranged along the width of the thermal recording medium 100. The light-receiving element 42 is formed of a CCD sensor of a line type arranged along the width of the thermal recording medium 100. An optical filter 43 blocking a visible range component and a condenser lens 44 are provided in front of the light-receiving surface of the light-receiving element 42. A user often adds a character image to the periphery of the thermal recording medium 100. Therefore, it is preferred that the CCD sensor be adjusted with respect to the size of the thermal recording medium 100 so as to be capable of receiving light reflected back from a range larger than the size of the thermal recording medium 100. Specifically, in the case of conveying the thermal recording medium 100 of A4 size in the direction of its length, it is preferable that the line CCD sensor be longer than the width of the thermal recording medium 100.

Here, a description will be given of the principles for reading a handwritten character image added to the surface of the thermal recording medium 100.

FIG. 8 is a graph showing the absorption spectrum of the reversible recording layer 102 formed of a leuco dye having the color development and erasure characteristics shown in FIG. 4A. As shown in FIG. 8, the leuco dye has no absorption in the infrared region. Accordingly, the part of the document image recorded in the reversible recording layer 102 absorbs no infrared light. On the other hand, ink having a pigment component having absorption in the infrared region is most commonly used as the added material 100a added by writing with a writing instrument to adhere to the surface of the thermal recording medium 100. Therefore, infrared light is absorbed on the part of the character image added to the surface of the thermal recording medium 100. By the difference between the absorption characteristics of the document image in the reversible recording layer 102 and the character image on the thermal recording medium 100, the character image on the thermal recording medium 100 can be distinguished from the document image in the reversible recording layer 102.

In this embodiment, the character image added to the surface of the thermal recording medium 100 is recognized as distinct from the document image recorded in the reversible recording layer 102 by using the light absorption characteristics. Alternatively, the distinction can also be made using the difference in another optical characteristic. Further, when the document image part of the reversible recording layer 102 and the character image part of the surface of the thermal recording medium 100 have similar optical characteristics, the distinction may be made based on their materials.

Based on the above-described principles, in this embodiment, it is possible to distinguish the character image on the surface of the thermal recording medium 100 from the document image recorded in the reversible recording layer 102 and read only the character image by using infrared LEDs as the light-emitting element 41 and receiving reflected light by the light-receiving element 42 of a line CCD sensor via the optical filter 43 blocking a visible range component. That is, the user recognizes both the document image recorded in the reversible recording layer 102 of the thermal recording medium 100 and the character image added to the surface thereof by receiving visible reflected light from these images with the naked eye. In the added image reading part 40, however, the visible reflected light is blocked by the optical filter 43, while infrared light emitted from the light-emitting element 41 is reflected to be received by the light-receiving element 42. Therefore, the light-receiving element 42 formed of a line CCD sensor receives reflected light from the reversible recording medium 102 including infrared light without distinction between the document image part and the non-document image part and reflected light from the character image part scarcely including any infrared light. Accordingly, part of the CCD sensor which part receives a small amount of light can be recognized as corresponding to the character image part. Therefore, it is possible to distinguish the character image on the surface of the thermal recording medium 100 from the document image in the reversible recording layer 102 and read only the character image.

According to the above-described configuration, a character image added to the surface of the thermal recording medium 100 as shown in FIGS. 2A and 2B can be read.

Next, a description will be given of a configuration in the case of reading a character image added to the surface of the thermal recording medium 100 and a barcode image as shown in FIGS. 3A and 3B.

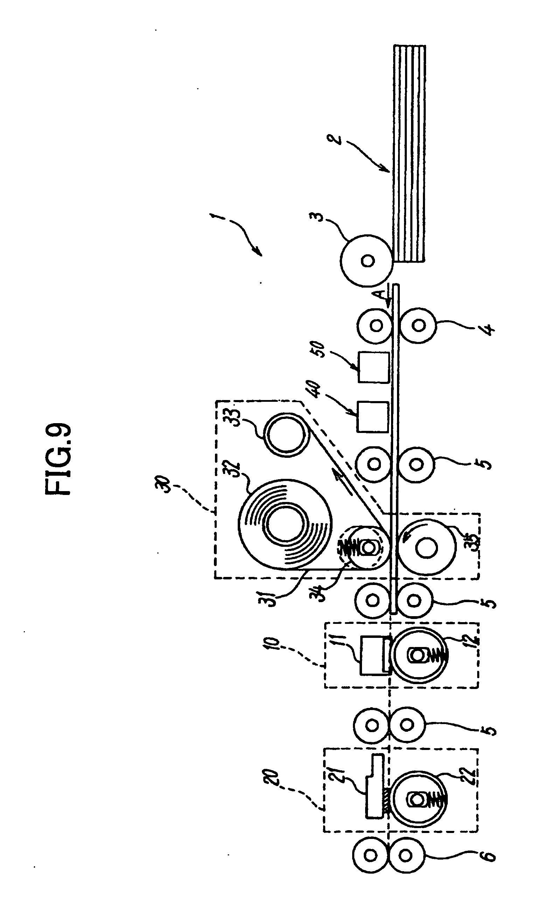

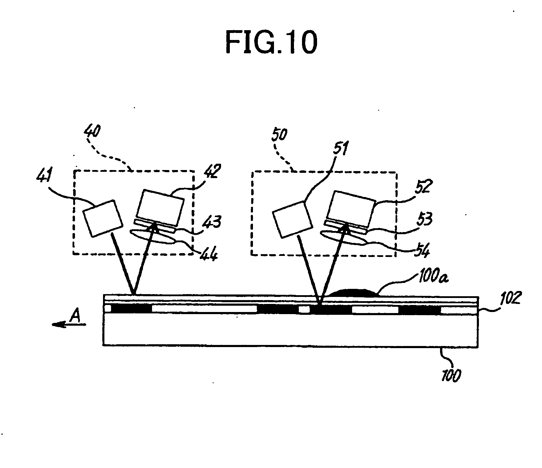

FIG. 9 is a schematic diagram showing a configuration of the recording rewriting apparatus 1 further including a barcode reading part 50 as an identification information reading part in addition to its configuration of FIG. 5. FIG. 10 is a schematic diagram showing the barcode reading part 50. In the recording rewriting apparatus 1 of FIG. 9, the barcode reading part 50 is provided on the upstream side of the added image reading part 40 in the medium conveying direction indicated by the arrow A in FIG. 9. However, the barcode reading part 50 may be provided at any position so as to read the barcode image before the barcode image is erased by the erasing part 10.

As shown in FIG. 10, like the added image reading part 40, the barcode reading part 50 includes a light-emitting element 51 and a light-receiving element 52. The light-emitting element 51 employs a visible light source such as a red LED as a light source, and the light-receiving element 52 employs a commonly used photodiode. Like the added image reading part 40, the light-receiving element 52 may be formed of a CCD sensor. However, since the barcode reading part 50 is only required to read barcode information represented by a barcode image, it is preferable to use a less expensive photodiode as the light-receiving element 52. An optical filter 53 blocking an infrared range component and a condenser lens 54 are provided in front of the light-receiving surface of the light-receiving element 52. The configuration of the barcode reading part 50 may employ a commonly used barcode reader. Like the document image, the barcode image is recorded in the reversible recording layer 102 of the thermal recording medium 100. Therefore, the barcode image has the same optical characteristic as the document image, so that the added image reading part 40 cannot read the barcode image.

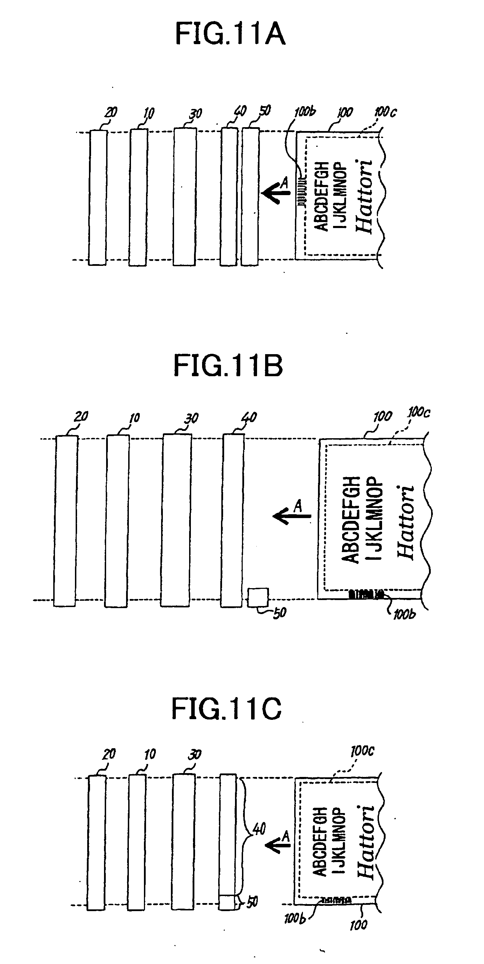

FIGS. 11A through 11C are top plan views of the recording rewriting apparatus 1 for illustrating configurations and arrangements of the barcode reading part 50. In FIGS. 11A through 11C, the recording rewriting apparatus 1 is viewed in a direction normal to the surface of the thermal recording medium 100.

FIG. 11A shows a configuration for reading a barcode image recorded on the leading-edge or trailing-edge side of the periphery of the thermal recording medium 100 in the medium conveying direction. Like the added image reading part 40, the barcode reading part 50 has a line structure so as to extend along the width of the thermal recording medium 100. In this case, the barcode image can be read even if it is uncertain on which part of the thermal recording medium 100 the barcode image is recorded.

FIGS. 11B and 11C show configurations for reading a barcode image recorded in the left side edge part of the thermal recording medium 100 in the medium conveying direction. In the configuration of FIG. 11B, the barcode reading part 50 is provided in advance so as to correspond to the position of the barcode image. In this case, if the position of the barcode image is standardized in advance, the configuration of the barcode reading part 50 can be simplified significantly. On the other hand, the barcode reading part 50 of FIG. 11C, which is also provided to correspond to the position of the barcode image, is aligned with the added image reading part 40 in the directions perpendicular to the medium conveying direction. In this case, one line sensor may be employed so that its detection region is used partly as the added image reading part 40 and partly as the barcode reading part 50. Accordingly, the added image reading part 40 and the barcode reading part 50 can be formed by a single line sensor, so that the recording rewriting apparatus 1 can be simplified. Further, the distance over which the thermal recording medium 100 is conveyed is shortened by omitting the line of the barcode reading part 50, so that the recording rewriting apparatus 1 can be downsized.

Next, a description will be given of the configuration (component arrangement) and the operation flows of the recording rewriting apparatus 1.

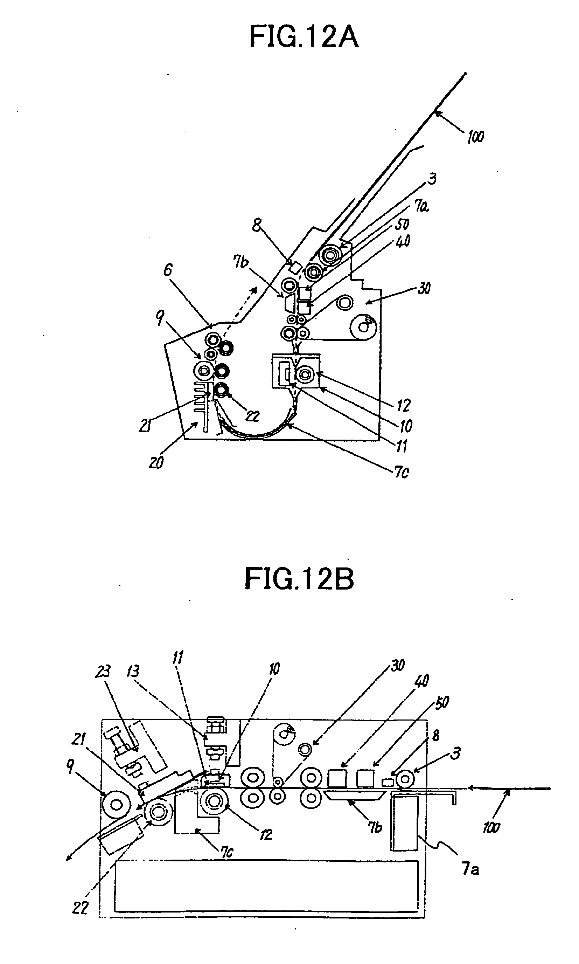

FIG. 12A is a schematic diagram showing a component arrangement of the recording rewriting apparatus 1, and FIG. 12B is a schematic diagram showing another component arrangement of the recording rewriting apparatus 1 according to this embodiment. In the following description, the recording rewriting apparatus 1 includes the above-described barcode reading part 50. In the recording rewriting apparatus 1 of FIG. 12A, a path for conveying the thermal recording medium 100 is formed substantially in a U-shape. In the recording rewriting apparatus 1 of FIG. 12B, the conveying path of the thermal recording medium 100 is formed substantially linearly. The recording rewriting apparatus 1 of FIG. 12A has the merit of occupying less space, but has lower conveyance stability. Meanwhile, the recording rewriting apparatus 1 of FIG. 12B has the merit of higher conveyance stability, but occupies more space. The component arrangement of the recording rewriting apparatus 1 is designed in consideration of these merits and demerits.

When the user sets the thermal recording medium 100 to be processed and a paper detecting sensor as a medium detecting part detects the thermal recording medium 100, the paper feed roller 3 starts to convey the thermal recording medium 100. A paper detecting sensor used in common copiers may be employed as the paper detecting sensor 8. Once the conveyance of the thermal recording medium 100 is started, first, the thermal recording medium 100 is conveyed to the barcode reading part 50, so that a barcode image recorded in the reversible recording layer 102 of the thermal recording medium 100 is read. Thereafter, the thermal recording medium 100 is conveyed to the added image reading part 40, so that a character image formed by the added material 100a adhering to the surface of the thermal recording medium 100 is read. The recording rewriting apparatus 1 of this embodiment includes guide members 7a, 7b, and 7c so that the thermal recording medium 100 is smoothly conveyed.

The thermal recording medium 100 thus passes the barcode reading part 50 and the added image reading part 40 to be conveyed to the cleaning part 30, which removes the adhering added material 100a and dust or a contaminant such as a fingerprint or grease from the surface of the thermal recording medium 100. Thereafter, the thermal recording medium 100 is conveyed to the erasing part 10, which erases a document image recorded in the reversible recording layer 102. Then, the thermal recording medium 100 is conveyed toward the recording part 20, guided by the guide member 7c. While guided by the guide member 7c, the thermal recording medium is cooled. The guide member 7c may be formed by processing material having high thermal conductivity, such as aluminum. The thermal recording medium 100 is thus conveyed to the recording part 20, so that an image corresponding to predetermined image information is recorded in the reversible recording layer 102 by the thermal head 21. Thereafter, the thermal recording medium 100 is cooled by a cooling roller 9 to be ejected from the recording rewriting apparatus 1. The pressure between the heater substrate 11 and the pressure roller 12 of the erasing part 10 and the pressure between the thermal head 21 and the pressure roller 22 of the recording part 20 are adjusted by pressure adjustment mechanisms 13 and 23, respectively. Thereby, the thermal recording medium 100 can be subjected to heat treatment constantly under an appropriate pressure, so that excellent erasing and recording can be performed.

According to the recording rewriting apparatus 1 of this embodiment, if no character is written on the surface of the thermal recording medium 100, the thermal recording medium 100 may be conveyed directly to the erasing part 10 or the recording part 20 without being subjected to cleaning processing in the cleaning part 30. In this case, before the operation is started, the presence or absence of a character image on the surface of the thermal recording medium 100 may be detected by a sensor as an added material detecting part so as to automatically determine whether to perform cleaning processing in the cleaning part 30. In this case, the added image reading part 40 may be used as the added material detecting part. Further, the user may operate an operation part to determine whether to perform cleaning processing in the cleaning part 30. The operation part operated by the user for such operation mode switching may be included in the recording rewriting apparatus 1 or the PC connected thereto.

Further, in the recording rewriting apparatus 1, in the case of performing only image erasing from or image recording on the thermal recording medium 100, the thermal recording medium 100 may pass an unnecessary one of the recording part 20 and the erasing part 10 without causing the unnecessary one to function, or the thermal recording medium 100 may be conveyed in a different path from the path used in the case of rewriting so as not to pass an unnecessary one of the recording part 20 and the erasing part 10.

Next, a description will be given of a control part 200 that controls each part of the recording rewriting apparatus 1.

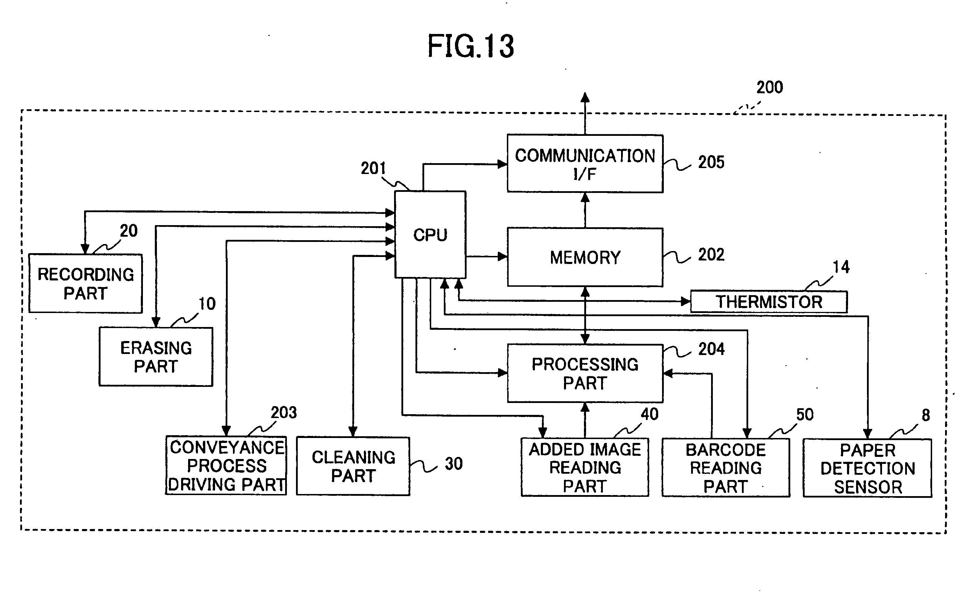

FIG. 13 is a block diagram showing the control part 200 of the recording rewriting apparatus 1. FIG. 13 does not show parts for processing document data transmitted from the PC, loading the document data into memory, and recording an image based on the document data. The control part 200 includes a CPU 201. The CPU 201 is connected to the erasing part 10, the recording part 20, the cleaning part 30, the added image reading part 40, the barcode reading part 50, and the paper detecting sensor 8. The CPU 201 is further connected to the power supply part (not shown in the drawing), a volatile or non-volatile memory 202, a conveyance process driving part 203, a processing part 204, a communication interface (I/F) 205, and a thermistor 14. The memory 202 stores data processed in the CPU 201. The conveyance process driving part 203 drives a series of conveyance operations from the start of the conveyance of the thermal recording medium 100 until ejection of the thermal recording medium 100 from the recording rewriting apparatus 1. The processing part 204 is formed of a processor IC correlating and processing character image data as added image data read by the added image reading part 40 and barcode information read by the barcode reading part 50. The communication I/F 205 functions as a communication part. The thermistor 14 monitors the temperature of the heater substrate 11. A conveyance process driver used in common copiers can be employed as the conveyance process driving part 203. Further, a common communication I/F such as an RS232C port, an Ethernet® port, or a PCMCIA card port can be employed as the communication I/F 205.

The CPU 201 executes a variety of information processing in accordance with a predetermined program. Thereby, the control part 200 outputs a processing start command to the added image reading part 40 so as to cause the added image reading part 40 to read a character image. Then, the control part 200 receives the character image data. Further, the control part 200 outputs a processing start command to the barcode reading part 50 so as to cause the barcode reading part 50 to read a barcode image. Then, the control part 200 receives the barcode information. The received character image data and the barcode information are stored in the memory 202. In this embodiment, a rewritable non-volatile memory such as a large-capacity flash memory or hard disk is used as the memory 202. Further, by the CPU 201 executing a variety of information processing in accordance with a predetermined program, the control part 200 outputs a processing start command to the erasing part 10, thereby causing the erasing part 10 to erase a document image recorded in the reversible recording layer 102 of the thermal recording medium 100. Further, the control part 200 outputs a processing start command to the recording part 20, thereby causing the recording part 20 to record a document image based on document data in the reversible recording layer 102.

Next, a description will be given of the configuration of a recording rewriting system, an operation of the recording rewriting apparatus 1, and an operation of the entire system according to this embodiment of the present invention.

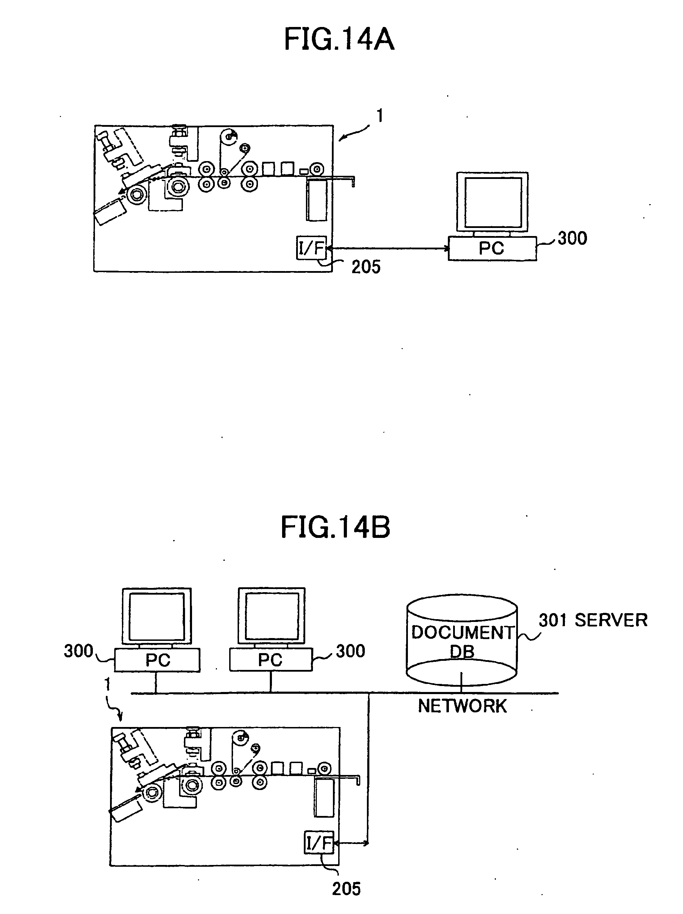

FIG. 14A is a schematic diagram showing a configuration of the recording rewriting system according to this embodiment. FIG. 14B is a schematic diagram showing another configuration of the recording rewriting system according to this embodiment. In the recording rewriting systems of FIGS. 14A and 14B, the user instructs the recording rewriting apparatus 1 via a PC 300. The recording rewriting system of FIG. 14A has a configuration in the case of using the recording rewriting apparatus 1 as a local printer. The recording rewriting system of FIG. 14B has a configuration in the case of using the recording rewriting apparatus 1 as a network printer. Further, each of the recording rewriting systems of FIGS. 14A and 14B employs the recording rewriting apparatus 1 of FIG. 12B.

In the recording rewriting system of this embodiment, the barcode information recorded on the thermal recording medium 100 is used to correlate the document image recorded in the reversible recording layer 102 of the thermal recording medium 100 and the document data stored in the hard disk of the PC 300. Specific information represented by the barcode information includes information for specifying data, such as a document name, a page number, and a computer name for specifying a PC storing the original document data of the document image of the thermal recording medium 100. When the PC 300 manages file locations with a so-called directory structure, information such as "¥¥computer name¥drive name¥folder name¥document name¥page" is obtained from the barcode information so that it can be specified where in which PC the original document data of the document image of the thermal recording medium 100 is stored. If the above-described data specifying information cannot be encoded directly into the barcode information, the data specifying information may be encoded into predetermined numeric information, for instance, and a table correlating the data specifying information and the barcode information via the numeric information may be prepared. In this case, the program executed by the CPU 201 is configured so as to recognize the data specifying information such as a document name by referring to the table upon receiving the barcode information. The table may be stored in either the recording rewriting apparatus 1 or the PC 300 connected thereto. On the other hand, when the data specifying information can be encoded directly into the barcode information, it is preferred to employ a two-dimensional code capable of coding a large amount of information, such as the QR code or the Data Matrix code.

When the recording rewriting system of the present invention is constructed by a network formed of the PCs 300 and a server 301 as shown in FIG. 14B, information for PC specification, such as a PC IP address, may be included in the barcode information instead of the computer name. The recording rewriting system of FIG. 14B is constructed by the client-server network formed of the PCs 300 and the server 301 according to this embodiment. However, the recording rewriting system of the present invention may be constructed by a network having a structure other than that of the network of FIG. 14B.

Next, a description will be given of the operation flow of the recording rewriting apparatus 1 and the operation flow of the entire recording rewriting system according to this embodiment. In the following description, the recording rewriting apparatus 1 includes the configuration of FIG. 11A.

First, a description will be given of the flow of a print instruction operation in the PC 300 in the case of recording, together with a barcode image, a document image based on document data created by the user with the PC 300 on the thermal recording medium 100.

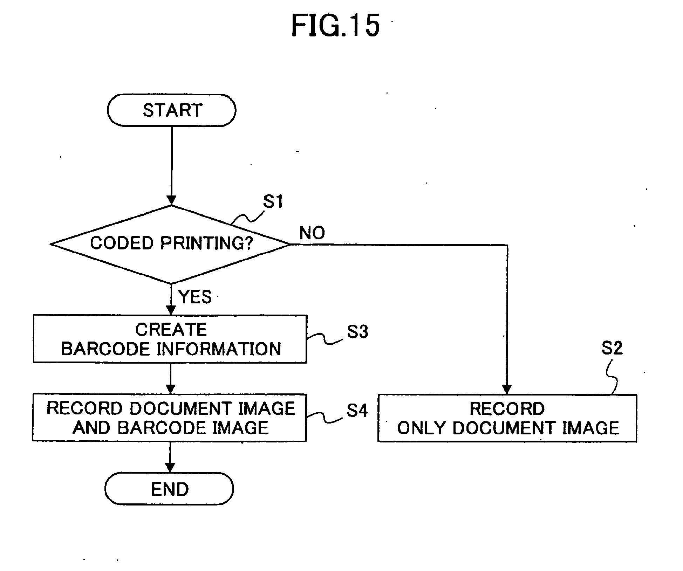

FIG. 15 is a flowchart of the operation of the PC 300 in the case of recording a document image, together with a barcode image, on the thermal recording medium 100. First, in the case of printing out document data that the user creates with the PC 300, in step S1, the user determines whether to print out the document data with or without barcode information. Printing with barcode information is referred to as coded printing, and printing without barcode information (printing of only the document data) is referred to as codeless printing. If the user follows an instruction screen such as a print dialog to determine to perform codeless printing in step S1 (that is, "NO" in step S1), in step S2, only a document image based on the document data is recorded in the recording operation of a later-described rewriting operation. On the other hand, if the user determines to perform coded printing in step S1, in step S3, the barcode information corresponding to a document image based on the document information is created. Then, in step S4, not only the document image based on the document information but also a barcode image based on the barcode information as shown in FIG. 11B is recorded in the recording operation of the rewriting operation. The operation of the PC 300 for causing the recording rewriting apparatus 1 to also record the barcode information can be realized by incorporating a barcode creation program as a module into commercially available software such as a word processing program. Likewise, before the start of the operation, the user may determine on the PC 300 whether to read a character image on the thermal recording medium 100.

Next, a description will be given of the flow of the rewriting operation of the recording rewriting apparatus 1 receiving a print command from the PC 300. The following description is given of the case where the rewriting operation is performed on the thermal recording medium 100 formerly printed out by coded printing by the recording rewriting apparatus 1 with characters written by the user with a writing instrument being added to the surface thereof. Further, in this embodiment, the user determines, in an instruction screen such as a print dialog displayed on the display of the PC 300, whether to read a character image on the surface of the thermal recording medium 100 to be processed, and in the following description, the user determines that a character image is to be read.

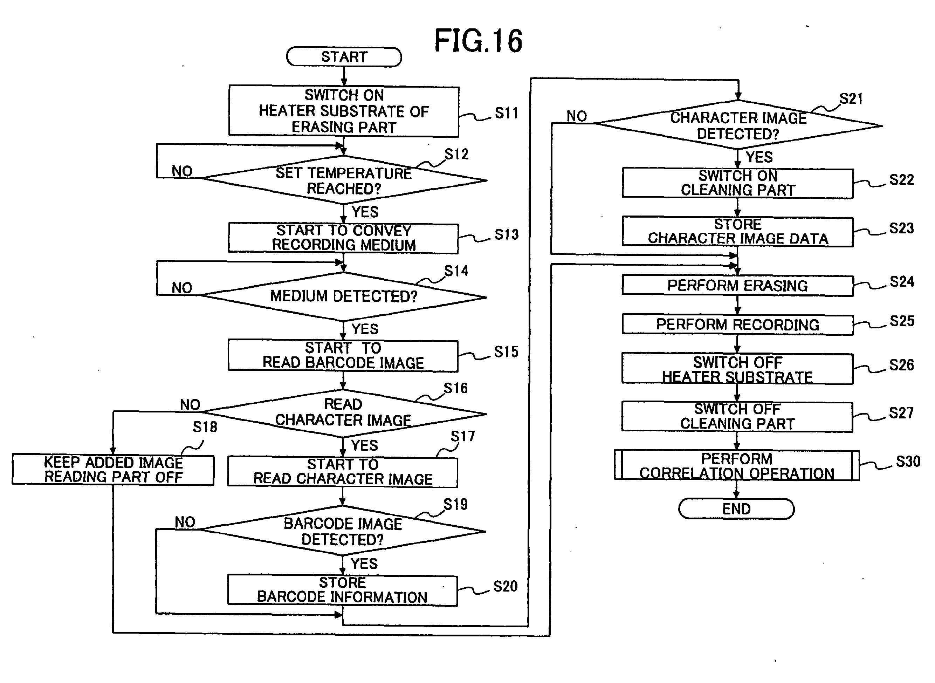

FIG. 16 is a flowchart of the rewriting operation performed on the thermal recording medium 100. First, the user sets the thermal recording medium 100 on which characters are written by the user with a writing instrument in the paper feed tray 2. Then, the user operates the PC 300 so as to give an instruction to print out the document data in accordance with the above-described print instruction operation. Receiving a print command from the PC 300 based on the instruction of the user, in step S11, the CPU 201 of the recording rewriting apparatus 1 executes a predetermined program for recording rewriting to start to heat the heater substrate 11 of the erasing part 10. The temperature of the heater substrate 11 is monitored by the thermistor 14 shown in FIG. 13, so that the CPU 201 recognizes the temperature of the heater substrate 11 based on the output signal of the thermistor 14. In step S12, the CPU 201 determines whether the heater substrate 11 reaches a set predetermined temperature. If the CPU 201 determines in step S12 that the heater substrate 11 reaches the predetermined temperature, in step S13, the CPU 201 outputs a conveyance command to the conveyance process driving part. 203 so as to start to convey the thermal recording medium 100. Then, in step S14, the CPU 201 determines whether the conveyed thermal recording medium 100 is detected by the paper detecting sensor 8. If the CPU 201 determines in step S14 that the conveyed thermal recording medium 100 is detected by the paper detecting sensor 8, the CPU 201 determines that the conveyance of the thermal recording medium 100 has been started normally, and outputs a processing start command to the barcode reading part 50. Thereby, in step S15, the barcode reading part 50 causes the light-emitting element 51 and the light-receiving element 52 to operate, and starts to read the barcode image of the thermal recording medium 100.

Next, in step S16, the CPU 201 determines whether to read the character image on the surface of the thermal recording medium 100. This determination follows the predetermination made by the user in the PC 300 as to whether to read the character image. In this embodiment, as previously described, the user has determined to read the character image. Therefore, in step S16, the CPU 201 determines to read the character image, and outputs a processing start command to the added image reading part 40. Thereby, in step S17, the added image reading part 40 causes the light-emitting element 41 and the light-receiving element 42 to operate, and starts to read the character image on the surface of the thermal recording medium 100. On the other hand, if the user determines not to read the character image in step S16, the CPU 201 is prevented from outputting a processing start command to the added image reading part 40, so that, in step S18, the added image reading part 40 remains unoperated (not caused to operate). By this configuration, an unnecessary operation can be omitted.

When the above-described parts start to operate so that the thermal recording medium 100 is conveyed to the barcode reading part 50, the light-receiving element 52 thereof detects a change in the intensity of reflected light from the thermal recording medium 100 so that the barcode reading part 50 reads the barcode image recorded in the reversible recording layer 102 of the thermal recording medium 100. In step S19, the CPU 201 determines whether the barcode image is read by the barcode reading part 50. If the CPU 201 determines in step S19 that the barcode image is read by the barcode reading part 50, in step S20, the barcode information is transmitted to the CPU 201 to be stored in the memory 202. When the thermal recording medium 100 is conveyed to the added image reading part 40, the light-receiving element 42 thereof detects a change in the intensity of reflected light from the thermal recording medium 100 so that the added image reading part 40 reads the character image on the surface of the thermal recording medium 100. Then, in step S21, the CPU 201 determines whether the character image is read by the added image reading part 40. If the CPU 201 determines in step S21 that the character image is read by the added image reading part 40, the character image data is transmitted to the CPU 201. Thereby, the CPU 201 outputs a processing start command to the cleaning part 30, so that, in step S22, the cleaning part 30 starts to remove the added material 100a and contaminants from the surface of the thermal recording medium 100. Further, in step S23, the CPU 201 stores the received character image data in the memory 202. In this embodiment, the added image reading part 40 is also used as the added material detecting part. However, another sensor may be provided separately from the added image reading part 40 as the added material detecting part.

Thereafter, the thermal recording medium 100 is conveyed along a predetermined conveying path, so that, in step S24, a document image recorded in the reversible recording layer 102 is erased in the erasing part 10, and in step S25, a new image based on image information supplied from the PC 300 is recorded in the reversible recording layer 102. When the thermal recording medium 100 completely passes the erasing part 10, the CPU 201 outputs a processing end command to the erasing part 10, so that, in step S26, the heating operation of the heater substrate 11 is stopped. Further, the CPU 201 outputs a processing end command to the cleaning part 30 after the thermal recording medium 100 completely passes the cleaning part 30, so that, in step S27, the cleaning part 30 stops the removal operation. Step S27 is performed in the case of performing a removal (cleaning) operation in the cleaning part 30.

When rewriting the image recorded in the reversible recording layer 102 of the thermal recording medium 100 is thus completed, in step S30, the CPU 201 executes a predetermined correlation program so as to function as a data converting part and an original data specifying part, correlating the barcode information and the character image data stored in the memory 202. This correlation operation may be started before completing rewriting the image recorded in the reversible recording layer 102 of the thermal recording medium 100 on condition that at least the barcode information and the character image information have been stored in the memory 202.

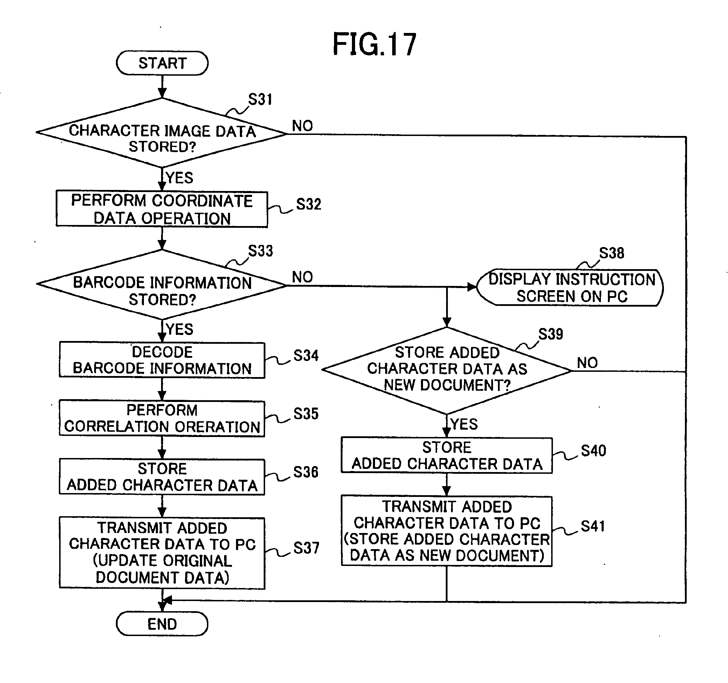

FIG. 17 is a flowchart of the (correlation) operation of correlating the barcode information and the character image data read from the thermal recording medium 100 in the above-described rewriting operation. In the correlation operation, based on the barcode information read from the thermal recording medium 100, the document image recorded in the reversible recording layer 102 of the thermal recording medium 100 and the document data as original data corresponding to the document image and stored in the PC 300 are correlated with each other. This document data is hereinafter referred to as original document data.

In this correlation operation, in step S31, the CPU 201 determines whether character image data is stored in the memory 202. In the case of the added image reading part 40 reading the character image in step S21 of the above-described rewriting operation, the CPU 201 determines in step S31 that character image data is stored, and in step S32, the CPU 201 performs a coordinate data operation on the character image data stored in the memory 202. If no character image has been read, the CPU 201 determines in step S31 that no character image data is stored and terminates the correlation operation (that is, "NO" in step S31). In the coordinate data operation, the CPU 201 executes a predetermined character recognition program so as to function as a data converting part, and converts the character image data so that the character image data, as electronic data (character data) correctable by the user, is recognizable by the PC 300. The contents of the coordinate data operation are equal to that of a normal OCR (optical character reader) operation. When the coordinate data operation is completed, in step S33, the CPU 201 determines whether barcode information is stored in the memory 202. In the case of the barcode reading part 50 reading the barcode image in step S19 of the rewriting operation, the CPU 201 determines in step S33 that barcode information is stored, and in step S34, the CPU 201 performs decoding based on the barcode information stored in the memory 202. In this decoding, the CPU 201 decodes the barcode information. Then, in step S35, the CPU 201 correlates the decoded barcode information with the added character data obtained in the coordinate data operation in step S32, and in step S36, the CPU 201 stores the added character data correlated with the decoded barcode information in the memory 202. In step S37, the added character data thus stored in the memory 202 is transferred via the communication I/F 205 to the PC 300 that stores the original document data which is specified based on the decoded barcode information. Thereby, the original document data stored in the PC 300 is updated so as to additionally include the character data of the character image added to the surface of the thermal recording medium 100 by the user.

On the other hand, if the CPU 201 determines in step S33 that no barcode information is stored (that is, "NO" in step S33), the CPU 201 transmits information to that effect to the PC 300 of the user giving the print-out instruction. Thereby, in step S38, an instruction screen asking the user to determine whether to store the added character data obtained in step S32 as a new document is displayed on the display of the PC 300 receiving the information. Then, in step S39, in accordance with the instruction screen, the user determines whether to store the added character data as a new document. If the user determines, in step S39, to store the added character data as a new document, information to that effect is transmitted from the PC 300 to the recording rewriting apparatus 1, and in step S40, receiving the information, the CPU 201 of the recording rewriting apparatus 1 stores the added character data in the memory 202. Thereafter, in step S41, the added character data stored in the memory 202 is transmitted via the communication I/F 205 to a predetermined location in a predetermined PC for document management, which is the PC 300 in this embodiment. Thereby, the added character data of the character image added to the surface of the thermal recording medium 100 by the user is newly stored in the PC 300.

### [Variation]

Practically, the above-described embodiment can be modified as required. A description will now be given of an operation in a variation of the above-described embodiment in which variation the recording rewriting apparatus 1 has the configuration of FIG. 11C where the added image reading part 40 and the barcode reading part 50 are formed of a single line sensor. According to the flowchart of the rewriting operation shown in FIG. 16, if the user makes an error in operating the PC 300 so as to unintentionally determine not to store the character image added to the surface of the thermal recording medium 100, the character image may be removed from the thermal recording medium 100 without being read by the added image reading part 40. Therefore, in this variation, the added image reading part 40 operates to read a character image on the surface of the thermal recording medium 100 every time irrespective of the user's instruction.

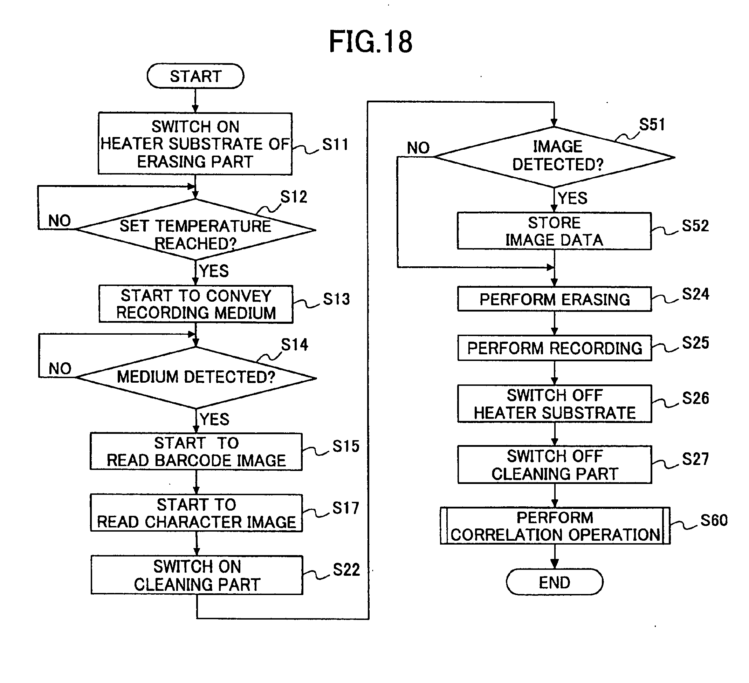

FIG. 18 is a flowchart of the rewriting operation according to this variation. In this rewriting operation, immediately after the same steps S11 through S15 as those of the flowchart of FIG. 16 are performed, in step S17, the added image reading part 40 starts to read the character image, and thereafter, in step S22, the cleaning part 30 removes the added material 100a and contaminants from the thermal recording medium 100.

Then, in step S51, the CPU 201 determines whether an image is read by the line sensor. In this variation, since the added image reading part 40 and the barcode reading part 50 are formed of the single line sensor, there is no distinction between the character image data and the barcode information in the data read by the line sensor. Therefore, if the CPU 51 determines in step S51 that an image is read by the line sensor, in step S52, the CPU 201 stores the image data in the memory 202 irrespective of whether the read image data is the character image data or the barcode information. Then, after the same steps S24 through S27 as those of the flowchart of FIG. 16 are performed, in step S60, the CPU 201 correlates the barcode information and the character image data based on the data stored in the memory 202.

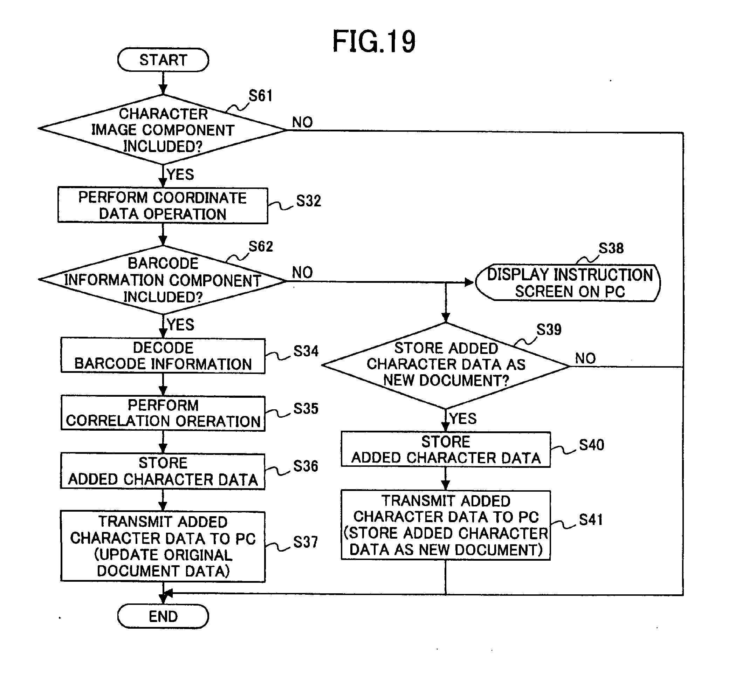

FIG. 19 is a flowchart of the correlation operation of this variation. The flow of the correlation operation of this variation is equal to that of the correlation operation shown in FIG. 17 except that the barcode information and the character image data are not distinguished in the data stored in the memory 202. In this variation, however, the barcode image is predetermined to be recorded in the left side edge part of the thermal recording medium 100 in the medium conveying direction. Therefore, the character image and the barcode image can be distinguished by the difference between the corresponding reading regions in the line sensor.

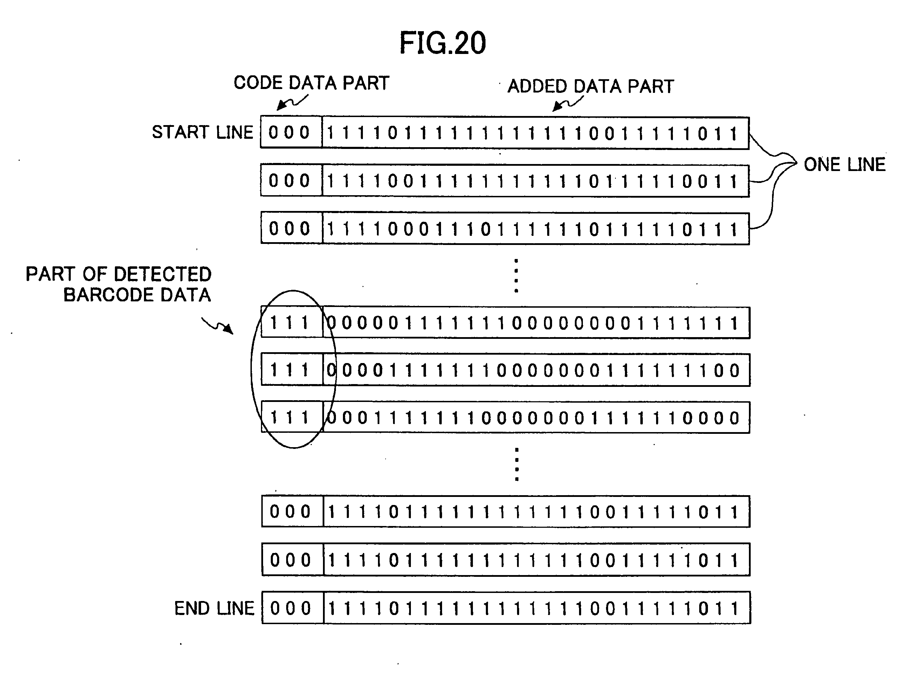

FIG. 20 is a diagram showing data arrays read by the line sensor as scanned line-by-line. In FIG. 20, the data arrays are read from top to bottom as the thermal recording medium 100 is conveyed in the medium conveying direction, and the left three-digit data corresponds to the left side edge part of the thermal recording medium 100 in the medium conveying direction. When the barcode image is recorded on the thermal recording medium 100, a detection signal showing part of the barcode information appears in the left three-digit data of the data arrays corresponding to lines in the middle as shown in FIG. 20. Accordingly, the CPU 201 receiving the data from the line sensor can recognize the character image component and the barcode information component of the data distinctively as individual information by the difference between the corresponding reading regions of the line sensor.

The CPU 201 thus makes a component distinction in the image data read in step S51 of the rewriting operation according to the reading regions of the line sensor, and in step S61, the CPU determines whether the character image component is included in the image data. If the CPU 201 determines in step S61 that the character image component is included in the image data, in step S32, the CPU 201 regards the character image component as the character image data and performs the coordinate data operation thereon. If the CPU 201 determines in step S61 that no character image component is included in the image data (that is, "NO" in step S61), the CPU 201 terminates the correlation operation. After completing the coordinate data operation, in step S62, the CPU 201 determines whether the barcode information component is included in the image data read in step S51 of the rewriting operation. If the CPU 201 determines in step S62 that the barcode information component is included in the image data, in step S34, the CPU 201 regards the barcode information component as the barcode information and decodes the barcode information. Thereafter, the same steps S34 through S37 as those of the flowchart of FIG. 17 are performed. If the CPU 201 determines in step S62 that no barcode information component is included in the image data (that is, "NO" in step S62), the same steps S38 through S41 as those of the flowchart of FIG. 17 are performed thereafter.

Thus, according to this embodiment, the recording rewriting apparatus 1 (a reversible recording medium processing apparatus), which includes the erasing part 10 and the recording part 20 that performs processing for changing the state of the reversible recording layer 102 of the thermal recording medium 100 (a reversible recording medium) where a visible image can be recorded and erased by changing the state of the reversible recording layer 102 whose state is reversibly changeable, further includes the added image reading part 40 that reads, as electronic data, an image added to the surface of the thermal recording medium 100. Therefore, the added image (character image) is read by the added image reading part 40 as electronic character image data processable by the PC 300. Accordingly, the contents of the information represented by the character image added to the surface of the thermal recording medium 100 can be reflected in the contents of the original document data corresponding to the visible image (document image) of the thermal recording medium 100. This saves the user from operating the PC 300 so as to input data to or correct the original document data, which has been conventionally required. Therefore, the operation efficiency of office workflow can be improved.

Further, the recording rewriting apparatus 1 of this embodiment includes the cleaning part 30 as an added material removing part removing the added material 100a forming the character image added to the surface of the thermal recording medium 100. Therefore, in the case of recording a new image on the thermal recording medium 100 having the character image added to its surface by the user, the new image can be recorded on the thermal recording medium 100 without the character image. Accordingly, the thermal recording medium 100 can be suitably reused and effectively used instead of the conventional recording medium such as paper. Further, by removing the added material 100a by the cleaning part 30 before getting the processing member such as the heater substrate 11 of the erasing part 10 or the thermal head 21 of the recording part 20 in contact with the surface of the thermal recording medium 100 so as to perform erasing or recording, the added material 100a is prevented from adhering to the processing member. This prevents the problem of the occurrence of incomplete erasure or print scratches caused by a significant decrease in the erasing or recording quality of the thermal recording medium 100.

Further, the recording rewriting apparatus 1 of this embodiment includes: the added image reading part 40 as an added material detecting part detecting the added material 100a adhering to the surface of the thermal recording medium; and the CPU 201 of the control part 200 as an operation control part switching the cleaning part 30 on and off so that the cleaning part 30 operates to remove the added material 100a when the added material 100a is detected by the added image reading part 40 and does not operate when the added material 100a is not detected (or no added material is detected) by the added image reading part 40. Therefore, the recording rewriting apparatus 1 is prevented from performing an unnecessary operation.

Further, the recording rewriting apparatus 1 of this embodiment includes the barcode reading part 50 as an identification information reading part reading barcode information that the thermal recording medium 100 possesses as identification information for identifying an image recorded on or added to the thermal recording medium 100. Therefore, the character image data that is the added image data read by the added image reading part 40 can be correlated with the document image recorded in the reversible recording layer 102 of the thermal recording medium 100. Accordingly, the original document data corresponding to the document image and the read character image data can be correlated with each other. Thus, the contents of the character image data can be added easily to the contents of the original document data.

Further, the recording rewriting apparatus 1 of this embodiment includes the CPU 201 of the control part 200 as a data converting part converting the character image data read by the added image reading part 40 into electronic added character data editable by the PC 300 installed with a word processing program as an editing part editing character data or image data (see step S32). If the added image is a character image as in this embodiment, for instance, the character image data is recognized as characters and processed into character codes so that the word processing program of the PC 300 can recognize each character as character data. Thereby, in the original data to which the character image data is added, its part of the characters added by the user can be easily corrected. Further, the added characters can be searched out more easily, so that data management can be simplified.

Further, according to this embodiment, the recording rewriting apparatus 1 including the barcode reading part 50 that reads the barcode information of the thermal recording medium 100 for identifying an image recorded on or added thereto is connected via a network as a communication part to the PC 300 or the server 301 as an information processing apparatus having a hard disk as an original data storing part storing the original document data as the original data of the document image as a visible image recorded in the reversible recording layer 102 of the thermal recording medium 100, thereby constructing a recording rewriting system as an added image processing system. The barcode information of the present invention includes a document name, a·page number, and a computer name as information for specifying the original document data of the document image recorded in the reversible recording layer 102 of the thermal recording medium 100 having the barcode information. The recording rewriting system of this embodiment includes: the CPU 201 of the control part 200 of the recording rewriting apparatus 1 as an original data specifying part specifying, among the document data stored in the hard disk of the PC 300 or the server 301, the original document data corresponding to the barcode information read by the barcode reading part 50 (see step S37); and the PC 300 or the server 301 as a data adding part adding the contents of the character image data read by the added image reading part 40 to the contents of the original document data specified by the CPU 201 of the control part 200. Therefore, the contents of the information represented by the character image added to the surface of the thermal recording medium 100 can be reflected in the contents of the original document data corresponding to the document image recorded on the thermal recording medium 100. Accordingly, the user is saved from operating the PC 300 to perform editing such as data inputting to the original document data, which has been conventionally required. Thereby, the operation efficiency of office workflow can be improved.

In this embodiment, the original document data is stored in the hard disk of the PC 300, and the contents of the information represented by the character image added to the surface of the thermal recording medium 100 is added to the contents of the original document data stored in the hard disk. This configuration can also be realized solely by the recording rewriting apparatus 1 without using the PC 300. In this case, a non-volatile memory such as a hard disk is provided in the recording rewriting apparatus 1 as the original data storing part storing the original document data, and the CPU 201 of the recording rewriting apparatus 1 is caused to function as the original data specifying part specifying, among the document data stored in the hard disk, the original document data corresponding to the barcode information read by the barcode reading part 50 and as the data adding part adding the contents of the character image data read by the added image reading part 40 to the contents of the specified original document data. Thereby, management of the original data of the document image recorded on the thermal recording medium 100 can be unified by the recording rewriting apparatus 1.

Further, the recording rewriting system of this embodiment includes: the display of the PC 300 as a display part informing the user of predetermined information; and the PC 300 as a display control part displaying on the display of the PC 300, when the original document data corresponding to the barcode information read by the barcode reading part 50 cannot be specified although the character image data is read by the added image reading part 40, information to the effect that the character image data cannot be added to the contents of the original document data. Thereby, it is possible to prompt the user to pay attention so that the user eliminates the cause preventing the character image data from being added to the contents of the original document data.

In the case of realizing this configuration of the recording rewriting system by the single unit of the recording rewriting apparatus 1, a display, for instance, is provided in the recording rewriting apparatus 1 as the display part informing the user of predetermined information, and the CPU 201 is caused to function as the display control part that, when the original document data corresponding to the barcode information read by the barcode reading part 50 cannot be specified although the character image data is read by the added image reading part 40, displays on the display part information to the effect that the CPU 201 cannot add the character image data to the contents of the original document data. Thereby, as in the above-described recording rewriting system, it is possible to prompt the user to pay attention so that the user eliminates the cause preventing the character image data from being added to the contents of the original document data.

Further, the recording rewriting system of this embodiment includes the CPU 201 of the recording rewriting apparatus 1 and the PC 300 or the server 301 as a new data storing part storing the character image data as new data when the original document data corresponding to the barcode information read by the barcode reading part 50 cannot be specified although the character image data is read by the added image reading part 40 (see steps S38 through S41). Thereby, even if the character image data and the original document data cannot be correlated, the character image added by the user can be stored as electronic data. Therefore, the user can use information on the character image later as electronic data.

In the case of realizing this configuration of the recording rewriting system with the single unit of the recording rewriting apparatus 1, the CPU 201 and the memory 202 of the recording rewriting apparatus 1, for instance, are caused to function as the new data storing part that stores the character image data as new data when the original document data corresponding to the barcode information read by the barcode reading part 50 cannot be specified although the character image data is read by the added image reading part 40. Thereby, as in the above-described recording rewriting system, even if the character image data and the original document data cannot be correlated, the character image added by the user can be stored as electronic data, so that the user can use information on the character image later as electronic data.

In this embodiment, letters (characters) are written on the surface of the thermal recording medium 100 by the user. However, the present invention is also applicable in the case where illustrations or marks are put on the surface of the thermal recording medium 100 instead of letters. In this case, the added image data of the illustrations or marks may be added to the original document data as read by the added image reading part 40 without being subjected to the above-described coordinate data operation.

Further, in this embodiment, the barcode image is used as identification information. However, instead of reading identification information from the barcode information, an information recording part such as a magnetic memory, an optical memory, a magneto-optical memory, or an IC memory may be provided in the support body 101 of the thermal recording medium 100 so as to read identification information recorded in the information recording part.

Further, in the recording rewriting system of this embodiment, part of the processing performed by the recording rewriting apparatus 1 may be performed by the PC 300, and part of the processing performed by the PC 300 may be performed by the recording rewriting apparatus 1. For instance, in the coordinate data operation of this embodiment, the recording rewriting apparatus 1 performs processing until the character image data is converted to electronic data (character data) correctable by the user. Alternatively, this processing may be performed so that the recording rewriting apparatus 1 performs processing until the received character image data is converted to coordinate data so as to be finally recognizable by the PC 300 as electronic data (character data) correctable by the user and the PC 300 executes the remaining character recognition operation that is finally performed based on the coordinate data.

## Claims

1. An apparatus (1) for processing a reversible recording medium (100) having a reversible recording layer (102) whose state is reversibly changeable so that a visible image can be recorded on or erased from the reversible recording medium (100) by changing the state of the reversible recording layer (102), the apparatus (1) including a processing part (10, 20) changing the state of the reversible recording layer (102), the apparatus (1) **characterized by**:
an added image reading part (40) reading, as electronic data, a character image added to a surface of the reversible recording medium (100) for obtaining character data, wherein the added image reading part (40) is arranged to distinguish the character image added to the surface of the recording medium (100) from the visible image recorded in the reversible recording medium layer (102) based on the different optical characteristic.

2. The apparatus (1) as claimed in claim 1, further **characterized by**:
an added material removing part (30) removing added material (100a) forming the added image on the surface of the reversible recording medium (100).

3. The apparatus (1) as claimed in claim 2, further **characterized by**:
an added material detecting part detecting the added material (100a) adhering to the surface of the reversible recording medium (100); and
an operation control part (201) controlling an operation of said added material removing part (30) so that said added material removing part (30) operates to remove the added material (100a) when the added material (100a) is detected by said added material detecting part and is prevented from operating when no added material is detected by said added material detecting part.

4. The apparatus (19 as claimed in claim 2 or 3, **characterized in that** said added image reading part (40) comprises said added material detecting part.

5. The apparatus as claimed in any one of claims 1 to 4, further **characterized by**:
an identification information reading part (50) reading identification information of the reversible recording medium (100) so as to identify an image recorded on or added to the reversible recording medium (100).

6. The apparatus (1) as claimed in claim 5, further **characterized by**:
a data converting part (201) converting data on the added image read by said added image reading part (40) into electronic data editable by an editing part (300) editing character data or image data.

7. The apparatus (1) as claimed in claim 5 or 6, **characterized in that** the identification information is barcode information.

8. The apparatus (1) as claimed in claim 5 or 6, **characterized in that** said added image reading part (40) and said identification information reading part (50) comprise a line sensor.

9. The apparatus (1) as claimed in claim 5, **characterized in that**
the identification information includes information for specifying original data of a visible image recorded in the reversible recording layer (102) of the reversible recording medium (100) having the identification information, the apparatus (1) further comprises:
an original data storing part storing the original data of the visible image recorded in the reversible recording layer (102) of the reversible recording medium (100);
an original data specifying part (201) specifying, among original data stored in said original data storing part, the original data corresponding to the identification information read by said identification information reading part (50); and
a data adding part (201) adding contents of the data on the added image read by said added image reading part (40) to contents of the original data specified by said original data specifying part (201).

10. The apparatus (1) as claimed in claim 9, further **characterized by**:
a display part informing a user of the apparatus (1) of predetermined information; and
a display control part (201) that, when said original data specifying part (201) is prevented from specifying the original data corresponding to the identification information read by said identification information reading part (50) although the data on the added image is read by said added image reading part (40), causes said display part to display information to the effect that said data adding part (201) is prevented from adding the contents of the data on the added image to the contents of the original data specified by said original data specifying part (201).

11. The apparatus (1) as claimed in claim 9 or 10, further **characterized by**:
a new data storing part (201,202) that, when said original data specifying part (201) is prevented from specifying the original data corresponding to the identification information read by said identification information reading part (50) although the data on the added image is read by said added image reading part (40), stores the data on the added image as new data.

12. The apparatus (1) as claimed in claim 1, wherein:
the reversible recording layer (102) is formed of a material absorbing no infrared light, and
the material of the image added to the surface of the reversible recording medium (100) absorbs the infrared light.

13. An image processing system including:
an apparatus (1) for processing a reversible recording medium (100) as claimed in any one of claims 1 to 12.

## Patentansprüche

1. Vorrichtung (1) zum Bearbeiten eines reversiblen Aufzeichnungsmediums (100), das eine reversible Aufzeichnungsschicht (102) besitzt, deren Zustand reversibel änderbar ist, so dass ein sichtbares Bild auf das reversible Aufzeichnungsmedium (100) aufgezeichnet oder hiervon gelöscht werden kann, indem der Zustand der reversiblen Aufzeichnungsschicht (102) geändert wird, wobei die Vorrichtung (1) einen Verarbeitungsabschnitt (10, 20) umfasst, der den Zustand der reversiblen Aufzeichnungsschicht (102) ändert, wobei die Vorrichtung (1) **gekennzeichnet ist durch**:
einen Abschnitt (40) zum Lesen eines hinzugefügten Bildes, um ein Zeichenbild, das zu einer Oberfläche des reversiblen Aufzeichnungsmediums (100) hinzugefügt worden ist, als elektronische Daten zu lesen, um Zeichendaten zu erhalten, wobei der Abschnitt (40) zum Lesen eines hinzugefügten Bildes ausgelegt ist, um das zu der Oberfläche des Aufzeichnungsmediums (100) hinzugefügte Zeichenbild von dem sichtbaren Bild, das in der reversiblen Aufzeichnungsmediumsschicht (102) aufgezeichnet ist, anhand der unterschiedlichen optischen Charakteristik zu unterscheiden.

2. Vorrichtung (1) nach Anspruch 1, die ferner **gekennzeichnet ist durch**:
einen Abschnitt (30) zum Entfernen von hinzugefügtem Material, um hinzugefügtes Material (100a), das das hinzugefügte Bild auf der Oberfläche des reversiblen Aufzeichnungsmediums (100) bildet, zu entfernen.

3. Vorrichtung (1) nach Anspruch 2, die ferner **gekennzeichnet ist durch**:
einen Abschnitt zum Detektieren von hinzugefügtem Material, um das hinzugefügte Material (100), das an der Oberfläche des reversiblen Aufzeichnungsmediums (100) anhaftet, zu detektieren; und
einen Arbeitssteuerabschnitt (201), um die Arbeit des Abschnitts (30) zum Entfernen von hinzugefügtem Material so zu steuern, dass der Abschnitt (30) zum Entfernen von hinzugefügtem Material arbeitet, um das hinzugefügte Material (100a) zu entfernen, wenn das hinzugefügte Material (100a) **durch** den Abschnitt zum Detektieren von hinzugefügtem Material detektiert wird, und am Arbeiten gehindert wird, wenn **durch** den Abschnitt zum Detektieren von hinzugefügtem Material kein hinzugefügtes Material detektiert wird.

4. Vorrichtung (1) nach Anspruch 2 oder 3, **dadurch gekennzeichnet, dass** der Abschnitt (40) zum Lesen eines hinzugefügten Bildes den Abschnitt zum Detektieren von hinzugefügtem Material umfasst.

5. Vorrichtung nach einem der Ansprüche 1 bis 4, die ferner **gekennzeichnet ist durch**:
einen Identifizierungsinformations-Leseabschnitt (50), um Identifizierungsinformationen des reversiblen Aufzeichnungsmediums (100) zu lesen, um so ein auf das reversible Aufzeichnungsmedium (100) aufgezeichnetes Bild oder ein ihm hinzugefügtes Bild zu identifizieren.

6. Vorrichtung (1) nach Anspruch 5, ferner **gekennzeichnet durch**:
einen Datenumsetzungsabschnitt (201), um Daten über das hinzugefügte Bild, die **durch** den Abschnitt (40) zum Lesen eines hinzugefügten Bildes gelesen werden, in elektronische Daten umzusetzen, die **durch** einen Editierungsabschnitt (300), der Zeichendaten oder Bilddaten editiert, editiert werden können.

7. Vorrichtung (1) nach Anspruch 5 oder 6, **dadurch gekennzeichnet, dass** die Identifizierungsinformationen Strichcode-Informationen sind.

8. Vorrichtung (1) nach Anspruch 5 oder 6, **dadurch gekennzeichnet, dass** der Abschnitt (40) zum Lesen eines hinzugefügten Bildes und der Identifizierungsinformations-Leseabschnitt (50) einen Zeilensensor umfassen.

9. Vorrichtung (1) nach Anspruch 5, **dadurch gekennzeichnet, dass**
die Identifizierungsinformationen Informationen zum Spezifizieren von ursprünglichen Daten eines auf die reversible Aufzeichnungsschicht (102) des die Identifizierungsinformationen besitzenden reversiblen Aufzeichnungsmediums (100) aufgezeichneten sichtbaren Bildes enthalten, wobei die Vorrichtung (1) ferner umfasst:
einen Abschnitt zum Speichern ursprünglicher Daten, um die ursprünglichen Daten des sichtbaren Bildes zu speichern, die in die reversible Aufzeichnungsschicht (102) des reversiblen Aufzeichnungsmediums (100) aufgezeichnet sind;
einen Abschnitt (201) zum Spezifizieren ursprünglicher Daten, um unter den in dem Abschnitt zum Speichern ursprünglicher Daten gespeicherten ursprünglichen Daten jene ursprünglichen Daten zu spezifizieren, die den Identifizierungsinformationen entsprechen, die durch den Identifizierungsinformations-Leseabschnitt (50) gelesen werden; und
einen Datenhinzufügungsabschnitt (201), um Inhalte der Daten über das durch den Abschnitt (40) zum Lesen eines hinzugefügten Bildes gelesene hinzugefügte Bild zu Inhalten der ursprünglichen Daten, die durch den Abschnitt (201) zum Spezifizieren ursprünglicher Daten spezifiziert werden, hinzuzufügen.

10. Vorrichtung (1) nach Anspruch 9, die ferner **gekennzeichnet ist durch**:
einen Anzeigeabschnitt, um einem Anwender der Vorrichtung (1) die vorgegebenen Informationen anzugeben; und
einen Anzeigesteuerabschnitt (201), der dann, wenn der Abschnitt (201) zum Spezifizieren ursprünglicher Daten daran gehindert wird, die ursprünglichen Daten zu spezifizieren, die den Identifizierungsinformationen entsprechen, die **durch** den ldentifizierungsinformations-Leseabschnitt (50) gelesen werden, obwohl die Daten über das hinzugefügte Bild **durch** den Abschnitt (40) zum Lesen eines hinzugefügten Bildes gelesen werden, den Anzeigeabschnitt dazu veranlasst, Informationen darüber anzuzeigen, dass der Datenhinzufügungsabschnitt (201) daran gehindert wird, die Inhalte der Daten über das hinzugefügte Bild zu den Inhalten der ursprünglichen Daten, die **durch** den Abschnitt (201) zum Spezifizieren ursprünglicher Daten spezifiziert werden, hinzuzufügen.

11. Vorrichtung (1) nach Anspruch 9 oder 10, ferner **gekennzeichnet durch**:
einen Abschnitt (201, 202) zum Speichern neuer Daten, der dann, wenn der Abschnitt (201) zum Spezifizieren ursprünglicher Daten daran gehindert wird, die ursprünglichen Daten zu spezifizieren, die den Identifizierungsinformationen entsprechen, die **durch** den Identifizierungsinformations-Leseabschnitt (50) gelesen werden, obwohl die Daten über das hinzugefügte Bild **durch** den Abschnitt (40) zum Lesen eines hinzugefügten Bildes gelesen werden, die Daten über das hinzugefügte Bild als neue Daten speichert.

12. Vorrichtung (1) nach Anspruch 1, wobei:
die reversible Aufzeichnungsschicht (120) aus einem Material gebildet ist, das kein Infrarotlicht absorbiert, und
das Material des zu der Oberfläche des reversiblen Aufzeichnungsmediums (100) hinzugefügten Bildes das Infrarotlicht absorbiert.

13. Bildverarbeitungssystem, das umfasst:
eine Vorrichtung (1) zum Verarbeiten eines reversiblen Aufzeichnungsmediums (100) nach einem der Ansprüche 1 bis 12.

## Revendications

1. Appareil (1) de traitement d'un support d'enregistrement réversible (100) possédant une couche d'enregistrement réversible (102) dont l'état est modifiable de façon réversible de sorte qu'une image visible peut être enregistrée sur ou effacée du support d'enregistrement réversible (100) en modifiant l'état de la couche d'enregistrement réversible (102), l'appareil (1) incluant une partie de traitement (10, 20) modifiant l'état de la couche d'enregistrement réversible (102), l'appareil
(1) étant **caractérisé par** :
une partie de lecture d'image ajoutée (40) lisant, comme données électroniques, une image de caractère ajoutée à une surface du support d'enregistrement réversible (100) pour obtenir des données de caractère, dans lequel la partie de lecture d'image ajoutée (40) est agencée pour distinguer l'image de caractère ajoutée à la surface du support d'enregistrement (100) de l'image visible enregistrée dans la couche de support d'enregistrement réversible (102) sur la base de la caractéristique optique différente.

2. Appareil (1) selon la revendication 1, **caractérisé en outre par** :
une partie de retrait de matière ajoutée (30) retirant de la matière ajoutée (100a) formant l'image ajoutée sur la surface du support d'enregistrement réversible (100).

3. Appareil (1) selon la revendication 2, **caractérisé en outre par** :
une partie de détection de matière ajoutée détectant la matière ajoutée (100a) adhérant sur la surface du support d'enregistrement réversible (100) ; et
une partie de commande d'opération (201) commandant une opération de ladite partie de retrait de matière (30) de sorte que ladite partie de retrait de matière (30) fonctionne pour retirer la matière ajoutée (100a) lorsque la matière ajoutée (100a) est détectée par ladite partie de détection de matière ajoutée et est empêchée de fonctionner lorsqu'aucune matière ajoutée n'est détectée par ladite partie de détection de matière ajoutée.

4. Appareil (1) selon la revendication 2 ou 3, **caractérisé en ce que** ladite partie de lecture d'image ajoutée (40) comprend ladite partie de détection de matière ajoutée.

5. Appareil selon l'une quelconque des revendications 1 à 4, **caractérisé en outre par** :
une partie de lecture d'informations d'identification (50) lisant les informations d'identification du support d'enregistrement réversible (100) de façon à identifier une image enregistrée ou ajoutée au support d'enregistrement réversible (100).

6. Appareil (1) selon la revendication 5, **caractérisé en outre par** :
une partie de conversion de données (201) convertissant des données sur l'image ajoutée lue par ladite partie de lecture d'image ajoutée (40) en données électroniques éditables par une partie d'édition (300) éditant des données de caractère ou les données d'image.

7. Appareil (1) selon la revendication 5 ou 6, **caractérisé en ce que** les informations d'identification sont des informations de code-barres.

8. Appareil (1) selon la revendication 5 ou 6, **caractérisé en ce que** ladite partie de lecture d'image ajoutée (40) et ladite partie de lecture d'informations d'identification (50) comprennent un détecteur de lignes.

9. Appareil (1) selon la revendication 5, **caractérisé en ce que** les informations d'identification incluent des informations pour spécifier des données d'origine d'une image visible enregistrée dans la couche d'enregistrement réversible (102) du support d'enregistrement réversible (100) possédant les informations d'identifications, l'appareil (1) comprenant en outre :
une partie de stockage de données d'origine stockant les donnés d'origine de l'image visible enregistrée dans la couche d'enregistrement réversible (102) du support d'enregistrement réversible (100) ;
une partie de spécification de données d'origine (201) spécifiant, parmi les donnés d'origine stockées dans ladite partie de stockage de données d'origine, les données d'origine correspondant aux informations d'identification lues par ladite partie de lecture d'informations d'identification (50) ; et
une partie d'ajout de données (201) ajoutant le contenu des données sur l'image ajoutée lue par ladite partie de lecture d'image ajoutée (40) au contenu des données d'origine spécifiées par ladite partie de spécification de données d'origine (201).

10. Appareil (1) selon la revendication 9, **caractérisé en outre par** :
une partie d'affichage informant un utilisateur de l'appareil (1) d'informations prédéterminées ; et
une partie de commande d'affichage (201) qui, lorsque ladite partie de spécification de données d'origine (201) est empêchée de spécifier les données d'origine correspondant aux informations d'identification lues par ladite partie de lecture d'informations d'identification (50) bien que les données sur l'image ajoutée soient lues par ladite partie de lecture d'image ajoutée (40), provoque de la part de la partie d'affichage l'affichage d'informations de sorte que ladite partie d'ajout de données (201) est empêchée d'ajouter le contenu des données sur l'image ajoutée au contenu des donnés d'origine spécifiées par ladite partie de spécification de données d'origine (201).

11. Appareil (1) selon la revendication 9 ou 10, **caractérisé en outre par** :
une partie de stockage de nouvelles données (201, 202) qui, lorsque ladite partie de spécification de données d'origine (201) est empêchée de spécifier les données d'origine correspondant aux informations d'identification lues par ladite partie de lecture d'informations d'identification (50) même si les données sur l'image ajoutée sont lues par ladite partie de lecture d'image ajoutée (40), stocke les données sur l'image ajoutée en tant que nouvelles données.

12. Appareil (1) selon la revendication 1, dans lequel :
la couche d'enregistrement réversible (102) est formée d'une matière n'absorbant aucune lumière infrarouge ; et
la matière de l'image ajoutée sur la surface du support d'enregistrement réversible (100) absorbe la lumière infrarouge.

13. Système de traitement d'images incluant :
un appareil (1) pour le traitement d'un support d'enregistrement réversible (100) de l'une quelconque des revendications 1 à 12.
